# EUROPEAN PATENT SPECIFICATION

(11) **EP 3 584 263 B1**
(45) Date of publication and mention of the grant of the patent: **05.05.2021**
(21) Application number: 18755107.2
(22) Date of filing: 01.02.2018
(51) Int. Cl.: C08F 236/04, C08F 210/00, C08F 212/06, C08L 9/00, B60C 1/00

(54) **MULTICOMPONENT COPOLYMER, RUBBER COMPOSITION, AND RUBBER ARTICLE**
MEHRKOMPONENTENCOPOLYMER, KAUTSCHUKZUSAMMENSETZUNG UND KAUTSCHUKARTIKEL
COPOLYMÈRE À PLUSIEURS CONSTITUANTS, COMPOSITION DE CAOUTCHOUC ET ARTICLE EN CAOUTCHOUC

(30) Priority: 20.02.2017 JP 2017029382
(43) Date of publication of application: 25.12.2019
(73) Proprietor: Bridgestone Corporation, Tokyo 104-8340 (JP)
(72) Inventor: KIMURA Madoka, Tokyo 104-8340 (JP)
(74) Representative: Oxley, Robin John George
(86) International application number: PCT/JP2018/003474
(87) International publication number: WO 2018/150900

(56) References cited:
- EP-A1- 3 363 832
- EP-A1- 3 363 838
- WO-A1-2015/190072
- WO-A1-2015/190072
- WO-A1-2015/190073
- WO-A1-2015/190073
- WO-A1-2017/065301
- JP-A- H1 135 744
- JP-A- H1 180 269
- JP-A- 2005 220 313
- JP-A- 2017 075 274
- JP-A- 2017 075 287

## Description

### TECHNICAL FIELD

The present invention relates to a multi-component copolymer, a rubber composition and a rubber article.

### BACKGROUND ART

A rubber composition used for manufacturing a rubber article such as a tire, a conveyor belt, a rubber damper or quake-absorbing rubber is generally required to have high durability and low-heat generating property. A variety of rubber components and rubber compositions have been developed to satisfy such a demand as described above. For example, PTL 1 discloses a copolymer of a conjugated diene compound and a non-conjugated olefin compound, wherein a conjugated diene unit thereof (derived from the conjugated diene compound) has a cis-1,4 bond content of greater than 70.5 mol % and the non-conjugated olefin is contained in an amount of 10 mol % or more. PTL 1 also discloses that the copolymer is for use in a rubber being excellent in performances like resistance to crack growth. Reference is also made to WO 2015/190073 and WO 2015/190072.

### CITATION LIST

### Patent Literature

### PTL 1: WO2012/014455

### SUMMARY OF THE INVENTION

### Technical Problems

In the techniques of PTL 1, however, the copolymer thereof as a binary copolymer obtained by copolymerizing a single type of conjugated diene compound and a single type of non-conjugated olefin compound inevitably exhibits a relatively long chain length at a portion of repeated units derived from the single type of non-conjugated olefin compound (at a portion of repeated units derived from ethylene when ethylene is used as the non-conjugated olefin, in particular) and thus high crystallinity, thereby possibly necessitating specific improvement in wear resistance of a product. Further, there is a demand for further improvement in low-heat generation property of a product in the techniques of PTL 1.

In view of the prior art problems described above, an object of the present disclosure is to provide a multi-component copolymer being excellent in low-heat generation property and wear resistance. Another object of the present disclosure is to provide a rubber composition and a rubber article being excellent in low-heat generation property and wear resistance by using the multi-component copolymer.

As a result of a keen study to solve the aforementioned problems, the inventors discovered that a multi-component copolymer including a conjugated diene unit, a non-conjugated olefin unit and an aromatic vinyl unit and having a structure and physical properties thereof optimized can realize satisfactory low-heat generation property and high wear resistance, thereby reaching the present disclosure.

The present disclosure has been contrived based on the aforementioned discovery and the primary features thereof are as follows.
A multi-component copolymer of the present disclosure is a multi-component copolymer containing a conjugated diene unit, a non-conjugated olefin unit and an aromatic vinyl unit, wherein a main chain thereof consists of noncyclic structures, a content of the aromatic vinyl unit is 1 mol % or less, and melting enthalpy of a non-conjugated olefin portion as a chain unit constituted exclusively of the non-conjugated olefin unit is 25 J/g or less.
It is possible to realize satisfactory low-heat generation property and high wear resistance by the structure described above.

The multi-component copolymer of the present disclosure preferably has melting point of 80 °C or lower because then it is possible to further improve the low-heat generation property and the wear resistance and achieve good workability.

Further, in the multi-component copolymer of the present disclosure, a content of the non-conjugated olefin unit is preferably less than 40 mol % because then it is possible to further improve the low-heat generation property of a resulting product. Yet further, in the multi-component copolymer of the present disclosure, a content of the non-conjugated olefin unit is preferably 20 mol % or more because then it is possible to further improve the wear resistance of a resulting product.

Further, in the multi-component copolymer of the present disclosure, a content of the conjugated diene unit is preferably less than 80 mol % because then it is possible to further improve durability of a resulting product.
Further, in the multi-component copolymer of the present disclosure, a content of the conjugated diene unit is preferably 60 mol % or more because then it is possible to cause the non-conjugated olefin unit and the aromatic vinyl unit to demonstrate effects thereof in a satisfactory manner.

Further, in the multi-component copolymer of the present disclosure, the non-conjugated olefin unit is preferably constituted exclusively of ethylene units because then it is possible to further improve the low-heat generation property and wear resistance of a resulting product.

Further, in the multi-component copolymer of the present disclosure, the aromatic vinyl unit preferably includes styrene unit because then it is possible to further improve the low-heat generation property and wear resistance of a resulting product.

Further, in the multi-component copolymer of the present disclosure, the conjugated diene unit preferably includes 1,3-butadiene unit and/or isoprene unit because then it is possible to further improve the wear resistance of a resulting product.

Further, the multi-component copolymer of the present disclosure preferably consists of 1,3-butadiene unit, ethylene unit and styrene unit because then it is possible to further improve the low-heat generation property and wear resistance of a resulting product.

Further, in the multi-component copolymer of the present disclosure, the aromatic vinyl unit is contained in an amount of 1 mol % or less because then it is possible to further improve the low-heat generation property of a resulting product.

A rubber composition of the present disclosure is characterized in that it includes the multi-component copolymer of the present disclosure.
The rubber composition can realize satisfactory low-heat generation property and high wear resistance by the structures described above.

A rubber article of the present disclosure is characterized in that it uses the rubber composition of the present disclosure.
The rubber article can realize satisfactory low-heat generation property and high wear resistance by the structures described above.

According to the present disclosure, it is possible to provide a multi-component copolymer being excellent in low-heat generation property and wear resistance.
Further, according to the present disclosure, it is possible to provide a rubber composition and a rubber article being excellent in low-heat generation property and wear resistance by using the multi-component copolymer.

### DESCRIPTION OF THE EMBODIMENTS

A multi-component copolymer of the present disclosure will be described in detail by embodiments thereof hereinafter.

### < Multi-component copolymer >

The multi-component copolymer of the present disclosure is a multi-component copolymer containing a conjugated diene unit, a non-conjugated olefin unit and an aromatic vinyl unit.

The multi-component copolymer of the present disclosure, which contains an aromatic vinyl unit as a third component in addition to a conjugated diene unit and a non-conjugated olefin unit, can inhibit formation of crystals derived from the non-conjugated olefin unit and thus significantly prevent ethylene crystals existing in a matrix from acting as starting points of breakage, thereby successfully improving wear resistance thereof.

In the multi-component copolymer of the present disclosure, a "conjugated diene unit" represents a unit corresponding to a structural unit derived from a conjugated diene compound contained therein, a "non-conjugated olefin unit" represents a unit corresponding to a structural unit derived from a non-conjugated olefin compound contained therein, and an "aromatic vinyl unit" represents a unit corresponding to a structural unit derived from an aromatic vinyl compound contained therein. Further, in the present disclosure, a "conjugated diene compound" represents a diene compound having a conjugated system therein, a "non-conjugated olefin compound" represents a non-conjugated compound as an aliphatic unsaturated hydrocarbon having at least one carbon-carbon double bond, and an "aromatic vinyl compound" represents an aromatic compound having at least vinyl group as a substituent group and not being a conjugated diene compound.

### (Conjugated diene unit)

The multi-component copolymer of the present disclosure contains a conjugated diene unit therein. The conjugated diene unit is a structural unit derived from a conjugated diene compound as monomer. The multi-component copolymer of the present disclosure, which is obtainable by polymerizing a conjugated diene compound as monomer, exhibits better crosslinking properties than copolymer obtained by polymerizing a non-conjugated diene compound such as conventionally known ethylene/propylene/non-conjugated diene rubber (EPDM). Accordingly, the multi-component copolymer of the present disclosure has an advantage that mechanical properties of a rubber composition and a rubber article manufactured by using the multi-component copolymer can further improve.

Either a single type or combination of two or more types of the conjugated diene compound may be used in the present disclosure. That is, the multi-component copolymer of the present disclosure may include either a single type or combination of two or more types of the conjugated diene units.

The conjugated diene compound preferably has four to eight carbon atoms. Specific examples of the conjugated diene compound include 1,3-butadiene, isoprene, 1,3-pentadiene, and 2,3-dimethyl-1,3-butadiene. The conjugated diene compound preferably includes 1,3-butadiene and/or isoprene, more preferably is constituted exclusively of monomers of 1,3-butadiene or isoprene, and further more preferably is constituted exclusively of 1, 3-butradiene in terms of effectively enhancing wear resistance of the multi-component copolymer.

Further, a content of the conjugated diene unit is preferably 60 mol % or more of the whole multi-component copolymer. Yet further, the content of the conjugated diene unit is preferably less than 80 mol %, more preferably 75 mol % or less of the whole multi-component copolymer.
The content of the conjugated diene unit of ≥ 60 mol % ensures that the multi-component copolymer functions uniformly as elastomer, thereby also ensuring satisfactory durability of a resulting product. The content of the conjugated diene unit of < 80 mol % ensures that an effect caused by inclusion of the non-conjugated olefin unit and the aromatic vinyl unit described below will not be inhibited but demonstrated in a satisfactory manner.

A cis-1,4 bond content in the whole conjugated diene unit is preferably ≥ 50 %, more preferably ≥ 70 %, further more preferably ≥ 80 %, and most preferably ≥ 90 %. A cis-1,4 bond content in the whole conjugated diene unit of ≥ 50 % effectively lowers the glass transition temperature, thereby effectively improving durability including crack growth resistance and wear resistance of a rubber composition, and a tire using the multi-component copolymer. Such multi-component copolymer having a high cis-1,4 bond content in the whole conjugated diene unit as described above can be obtained by using as monomers a conjugated diene compound, a non-conjugated olefin compound and an aromatic vinyl compound, respectively.
In contrast, a vinyl bond (e.g. 1,2-vinyl bond, 3,4-vinyl bond) content in the whole conjugated diene unit is preferably ≤ 50 %, more preferably ≤ 30 %, further more preferably ≤ 15 %, yet further more preferably ≤ 10 %, and most preferably ≤ 6 %. A trans-1,4 bond content in the whole conjugated diene unit is preferably ≤ 30 %, more preferably ≤ 15 %, and further more preferably ≤ 10 %.

### (Non-conjugated olefin unit)

The multi-component copolymer of the present disclosure contains a non-conjugated olefin unit therein. The non-conjugated olefin unit is a structural unit derived from a non-conjugated olefin compound as monomer. The non-conjugated olefin compound preferably has two to ten carbon atoms. Specific examples of the non-conjugated olefin compound include: α-olefin such as ethylene, propylene, 1-butene, 1-pentene, 1-hexene, 1-heptene, or 1-octene; a heteroatom-substituted alkene compound such as vinyl pivalate, 1-phenylthio ethene, and N-vinylpyrrolidone. Either a single type or combination of two or more types of these examples may be used as the non-conjugated olefin compound. That is, the multi-component copolymer of the present disclosure may include either a single type or combination of two or more types of the non-conjugated olefin units.

The non-conjugated olefin compound contained in the multi-component copolymer of the present disclosure is preferably a noncyclic non-conjugated olefin compound in terms of further enhancing wear resistance of the multi-component copolymer. In this regard, the noncyclic non-conjugated olefin compound is preferably α-olefin, more preferably α-olefin including ethylene, and most preferably constituted exclusively of ethylene.
In other words, the non-conjugated olefin unit contained in the multi-component copolymer of the present disclosure is preferably a noncyclic non-conjugated olefin unit. The noncyclic non-conjugated olefin unit is preferably an α-olefin unit, more preferably an α-olefin unit including ethylene unit, and most preferably constituted exclusively of ethylene units.

Further, a content of the non-conjugated olefin unit is preferably ≥ 20 mol %, more preferably ≥ 30 mol %, and most preferably ≥ 35 mol % of the whole multi-component copolymer. Yet further, the content of the non-conjugated olefin unit is preferably < 40 mol % and more preferably ≤ 38 mol % of the whole multi-component copolymer.
The content of the non-conjugated olefin unit of ≥ 20 mol % ensures satisfactorily high wear resistance of a resulting product. The content of the non-conjugated olefin unit of < 40 mol % ensures further improvement in low-heat generation property of a resulting product.

### (Aromatic vinyl unit)

The multi-component copolymer of the present disclosure contains an aromatic vinyl unit therein. The aromatic vinyl unit is a structural unit derived from an aromatic vinyl compound as monomer. The aromatic vinyl compound preferably has eight to ten carbon atoms. Specific examples of the aromatic vinyl compound include styrene, o-methylstyrene, m-methyl styrene, p-methyl styrene, o, p-dimethyl styrene, o-ethylstyrene, m-ethylstyrene, and p-ethylstyrene.

The aromatic vinyl compound as monomer contained in the multi-component copolymer of the present disclosure preferably includes styrene and more preferably is constituted exclusively of styrene in terms of reducing crystallinity of a resulting multi-component copolymer and thus further improving wear resistance of the multi-component copolymer. In other words, the aromatic vinyl unit in the multi-component copolymer of the present disclosure preferably includes styrene unit and more preferably is constituted exclusively of styrene units.
It should be noted that an aromatic ring in the aromatic vinyl unit is not included in the main chain of the copolymer unless the aromatic ring is bonded to an adjacent unit. Either a single type or combination of two or more types of the aromatic vinyl compound may be used in the present disclosure. That is, the multi-component copolymer of the present disclosure may include either a single type or combination of two or more types of the aromatic vinyl units.

The multi-component copolymer of the present disclosure is characterized in that a content of the aromatic vinyl unit is 1 mol % or less of the whole multi-component copolymer. Setting the content of the aromatic vinyl unit to be ≤ 1 mol % of the whole multi-component copolymer suppresses an increase in the glass transition temperature and thus makes it possible to attain satisfactory low-heat generation property of a resulting product. From similar viewpoints, the content of the aromatic vinyl unit is preferably ≤ 0.5 mol % of the whole multi-component copolymer. Further, in terms of improving wear resistance, the content of the aromatic vinyl unit is preferably ≥ 0.1 mol % and more preferably ≥ 0.2 mol % of the whole multi-component copolymer.

The multi-component copolymer of the present disclosure may further include any unit other than a conjugated diene unit, a non-conjugated olefin unit and an aromatic vinyl unit described above. It is preferable, however, that the unit other than a conjugated diene unit, a non-conjugated olefin unit and an aromatic vinyl unit is contained in an amount of 0 mol % in the multi-component copolymer of the present disclosure (i.e. the multi-component copolymer of the present disclosure does not include any unit other than a conjugated diene unit, a non-conjugated olefin unit and an aromatic vinyl unit) in terms of obtaining a desired effect of the present disclosure.

The number of types of monomers derived from the multi-component copolymer of the present disclosure is not particularly restricted as long as the multi-component copolymer includes a conjugated diene unit, a non-conjugated olefin unit and an aromatic vinyl unit. It is preferable, however, that the multi-component copolymer of the present disclosure is a copolymer obtained by polymerizing at least, as monomers, one type of a conjugated diene compound, one type of a non-conjugated olefin compound and one type of an aromatic vinyl compound in terms of further improving low-heat generation property and wear resistance of a resulting product.
In other words, the multi-component copolymer of the present disclosure is preferably a multi-component copolymer including one type of a conjugated diene unit, one type of a non-conjugated olefin unit and one type of an aromatic vinyl unit. From similar viewpoints, the multi-component copolymer of the present disclosure is more preferably a terpolymer including one type of a conjugated diene unit, one type of a non-conjugated olefin unit and one type of an aromatic vinyl unit and further more preferably a terpolymer consisting exclusively of a 1,3-butadiene unit, an ethylene unit and styrene unit.
In the present disclosure, "one type of a conjugated diene unit" comprehensively includes conjugated diene units of different chemical bond types (e.g. cis-1,4 bond, trans-1,4 bond, 1,2-vinyl bond).

The multi-component copolymer of the present disclosure, of which main chain consists of noncyclic structures, can effectively prevent crystals derived from a non-conjugated olefin unit from growing and acting as starting points of breakage, thereby successfully improving wear resistance of the multi-component copolymer. A multi-component copolymer having a cyclic structure in a main chain thereof may be hardened, thereby deteriorating durability thereof.
NMR is employed as primary measurement means for determining whether a main chain of a copolymer has a cyclic structure or not. Specifically, when a peak derived from a cyclic structure existing in a main chain (e.g. a peak appearing in a range of 10 ppm to 24 ppm in cases of three-membered ring, four-membered ring five-membered ring) is not observed, the result indicates that the main chain of the copolymer is exclusively constituted of non-cyclic structures.
In the present disclosure, a "main chain" represents a long chain-like portion defined between the respective bond terminals of each unit and may be either a normal chain or a branched chain, depending on the type of a chain structure of a copolymer. Accordingly, a "main chain" does not include a branched portion not bonded to both adjacent units, of each unit constituting a copolymer.

Further, the multi-component copolymer of the present disclosure is characterized in that melting enthalpy of a non-conjugated olefin portion as a chain unit constituted exclusively of the non-conjugated olefin unit (which portion may occasionally be referred to as a "non-conjugated olefin portion" hereinafter) is 25 J/g or less. It is possible to realize satisfactory low-heat generation property and workability, with maintaining high wear resistance, by suppressing melting enthalpy of the non-conjugated olefin portion to 25 J/g or less.
In this regard, melting enthalpy of the non-conjugated olefin portion is preferably 10 J/g or higher and more preferably 15 J/g or higher in terms of achieving satisfactory crystal growth sufficient for crystals to function as a reinforcing material and thereby further improving wear resistance of a resulting product.
In the present specification, "melting enthalpy" of a non-conjugated olefin portion of a multi-component copolymer represents melting enthalpy (ΔHm) of the non-conjugated olefin portion obtained by DSC measurement. Specifically, melting enthalpy of a non-conjugated olefin portion of a multi-component copolymer can be obtained, for example, as an amount of heat (J/g) required when crystal melts in a temperature range of 0 °C to 140 °C at a temperature-increasing rate of 10 °C/min by using a differential scanning calorimeter (DSC).

Further, the multi-component copolymer of the present disclosure preferably has melting point (Tₘ) of 80 °C or lower. The multi-component copolymer having melting point of 80 °C or lower can express satisfactorily high wear resistance. The melting point (Tₘ) is preferably 50 °C or higher, more preferably 60 °C or higher, and most preferably 70 °C or higher. Setting the melting point of the multi-component copolymer to be 50 °C or higher ensures that wear resistance of the multi-component copolymer improves within a temperature range in which a resulting product is used. The melting point (Tₘ) of the multi-component copolymer can be measured by using the aforementioned DSC.

Melting enthalpy and degree of crystallization of a non-conjugated olefin portion, as well as the melting point of the multi-component copolymer, can be adjusted by, for example, appropriately controlling conditions such as amounts of respective monomers to be charged, the order of charging the respective monomers into a reaction vessel, the number of operations introducing the respective monomers, and type of a polymerization catalyst when the respective monomers are polymerized.

The multi-component copolymer of the present disclosure has weight average molecular weight (Mw) in terms of polystyrene preferably in the range of 10,000 to 10,000,000, more preferably in the range of 100,000 to 9,000,000, and most preferably in the range of 150,000 to 8,000,000. The weight average molecular weight (Mw) of the multi-component copolymer, of 150,000 or more ensures that the multi-component copolymer has satisfactory mechanical strength as a material for use in a rubber article and the MW of the multi-component copolymer, of 8,000,000 or less, ensures good workability of the multi-component copolymer.
Further, the multi-component copolymer of the present disclosure has a molecular weight distribution (Mw/Mn) represented by a ratio of the weight average molecular weight (Mw) in terms of polystyrene with respect to the number average molecular weight (Mn) in terms of polystyrene thereof, of preferably ≤ 12.0, more preferably ≤ 9.0, and most preferably ≤ 8.0. The molecular weight distribution (Mw/Mn) of the multi-component copolymer, of ≤ 12.0, ensures satisfactorily uniform expression of physical properties of the multi-component copolymer.
A weight average molecular weight (Mw) in terms of polystyrene and a molecular weight distribution (Mw/Mn) described above can be determined relative to those of polystyrene as a standard reference material by gel permeation chromatography (GPC).

Type of a chain structure of the multi-component copolymer of the present disclosure is not particularly restricted and can be appropriately selected in accordance with a specific purpose. For example, provided that "A" represents a conjugated diene unit, "B" represents a non-conjugated olefin unit and "C" represents an aromatic vinyl unit, the chain structure of the multi-component copolymer may be any of a block copolymer having e.g. a structure of Aₓ-B_{y}-C_{z} (x, y, z are integers of ≥ 1, respectively), a tapered copolymer having both a structure where A, B and C are randomly arranged and a structure of the aforementioned block copolymer in a mixed manner.
The multi-component copolymer of the present disclosure may have either a structure in which a conjugated diene unit, a non-conjugated olefin unit and an aromatic vinyl unit constitute a linear chain structure (a normal chain structure) or a structure in which at least one of a conjugated diene unit, a non-conjugated olefin unit and an aromatic vinyl unit constitute a branched chain unit (a branched chain structure). In a case where the multi-component copolymer of the present disclosure has a branched structure, the branched chain may be constituted of either two components or three or more components (that is, the branched chain may include at least two of a conjugated diene unit, a non-conjugated olefin unit and an aromatic vinyl unit). In this regard, the multi-component copolymer with a branched structure having a branched chain constituted of either two or at least three components, as an example of the multi-component copolymer of the present disclosure, is clearly distinguished from the conventional graft copolymer where a main chain as a stem is constituted of one type of unit and each side chain is constituted of another, different type of unit.

### < Method for manufacturing multi-component copolymer >

Next, an example of a method for manufacturing the multi-component copolymer of the present disclosure will be described in detail. The example of a method for manufacturing the multi-component copolymer of the present disclosure essentially employs a conjugated diene compound, a non-conjugated olefin compound and an aromatic vinyl compound as monomers, includes at least polymerization process, and may further include other processes such as coupling, and rinsing according to necessity.

### (Polymerization process)

Polymerization process is a process of selecting at least a conjugated diene compound, a non-conjugated olefin compound and an aromatic vinyl compound as monomers and polymerizing them. The polymerization process preferably includes an operation of adding only a non-conjugated olefin compound and/or an aromatic vinyl compound for polymerization under the presence of a catalyst, without adding a conjugated diene compound. Examples of a method for adjusting the length of a non-conjugated olefin portion in the multi-component copolymer include appropriately adjusting time during which only a non-conjugated olefin compound exists as monomer under the presence of a catalyst.
It should be noted that, when such a polymerization catalyst composition as described below is used, it is possibly difficult to polymerize a non-conjugated olefin compound and/or an aromatic vinyl compound under the presence of a conjugated diene compound because the conjugated diene compound is more reactive with the polymerization catalyst composition than the non-conjugated olefin compound and the aromatic vinyl compound are. In this regard, it is presumably also difficult in terms of the characteristics of the catalyst to additionally carry out polymerization of the non-conjugated olefin compound and/or the aromatic vinyl compound after polymerizing the conjugated diene compound.

Any polymerization method such as solution polymerization, suspension polymerization, liquid-phase bulk polymerization, emulsion polymerization, vapor-phase polymerization, or solid-phase polymerization can be used as a polymerization method. Any solvent can be used when a solvent is to be used in the polymerization reaction as long as the solvent is inactive in the polymerization reaction. Examples of such a solvent as described above include toluene, cyclohexane, and n-hexane.

A polymerization reaction in the polymerization process is preferably carried out in an atmosphere of inert gas, preferably in an atmosphere of nitrogen gas or argon gas. The polymerization temperature in the polymerization reaction, although it is not particularly restricted, is preferably in the range of -100 °C to 200 °C and may be around the room temperature, for example. Too high polymerization temperature may adversely affect selectivity of cis-1,4 bond in the polymerization reaction. Pressure during the polymerization reaction is preferably in the range of 0.1 MPa to 10.0 MPa in terms of capturing a sufficient amount of a conjugated diene compound into the polymerization reaction system. Reaction time of the polymerization reaction is preferably in the range of 1 second to 10 days, for example, although it is not particularly restricted. The reaction time may be appropriately set depending on conditions such as type of the catalyst, and polymerization temperature.

The polymerization reaction can be stopped by using a polymerization terminator such as methanol, ethanol, isopropanol in the polymerization process of the conjugated diene compound described above.

The aforementioned polymerization of a non-conjugated olefin compound, an aromatic vinyl compound and a conjugated diene compound is preferably carried out under the presence of a first polymerization catalyst composition, a second polymerization catalyst composition or a third polymerization catalyst composition described below.

### -- First polymerization catalyst composition --

A first polymerization catalyst composition will be described hereinafter.

The first polymerization catalyst composition contains component (A), which is a rare earth element-containing compound represented by formula (I) below.

M-(A(₂¹)(AQ²)(AQ³) ... (I)

(In formula (I), M represents an element selected from scandium, yttrium and lanthanoid; AQ¹, AQ² and AQ³ represent functional groups which may be of the same type or different types; "A" represents an element selected from nitrogen, oxygen and sulfur; and the compound essentially includes at least one M-A bond).

Specific examples of the lanthanoid elements of the component (A) include lanthanum, cerium, praseodymium, neodymium, promethium, samarium, europium, gadolinium, terbium, dysprosium, holmium, erbium, thulium, ytterbium, and lutetium.

Either a single type or combination of two or more types of the aforementioned examples may be used as the lanthanoid elements of the component (A). The component (A) is a component capable of improving catalytic activity in the reaction system, reducing reaction time and increasing the reaction temperature.

With regard to "M" described above, gadolinium is preferable in terms of enhancing the catalytic activity and the reaction controllability.

Either a single type or combination of two or more types of compounds may be used as the component (A).

The compound represented by the formula (I) has at least one M-A bond. The compound of the formula (I), provided with at least one M-A bond, has a stable structure because the respective bonds thereof are chemically equivalent to each other, whereby the compound is easy to handle and thus it is possible to manufacture the multi-component copolymer efficiently at low production cost. The compound represented by the formula (I) may further contain a bond other than M-A bond, for example, a bond between a metal other than M and a heteroatom such as O or S.

In the formula (I), when "A" represents nitrogen, examples of the functional group represented by AQ¹, AQ² and AQ³ (i.e. NQ¹, NQ² and NQ³) include amide group. Examples of the amide group include: aliphatic amide group such as dimethylamide, diethylamide, diisopropylamide; arylamide group such as phenylamide, 2,6-di-tert-butylphenylamide, 2,6-diisopropylphenylamide, 2,6-dineopentylphenylamide, 2-tert-butyl-6-isopropylphenylamide, 2-tert-buty-6-neopentylphenylamide, 2-isopropyl-6-neopentylphenylamide, and 2,4,6-tert-butylphenylamide; and bistrialkylsilylamide such as bistrimethylsilylamide. Bistrimethylsilylamide is preferable as the amide group among these examples in terms of solubility to aliphatic hydrocarbon.
Either a single type or combination of two or more types of these examples may be used as the functional group.

In the formula (I), when "A" represents oxygen, examples of the functional group represented by AQ¹, AQ² and AQ³ (i.e. OQ¹, OQ² and OQ³) include alkoxy group, acyloxy group, and alkoxycarboxyl group. Preferable examples of alkoxy group include methoxy, ethoxy, and isopropoxy. Preferable examples of acyloxy group include acetoxy, valeroyl, and pivaloyl.
Either a single type or combination of two or more types of these examples may be used as the functional group.

In the formula (I), when "A" represents sulfur, examples of the functional group represented by AQ¹, AQ² and AQ³ (i.e. SQ¹, SQ² and SQ³) include alkylthio group, and alkylsulfonyl group. Preferable examples of alkylthio group include methylthio, and isopropylthio. Preferable examples of alkylsulfonyl group include phenylsulfonyl, isopropanesulfonyl, and hexanesulfonyl.
Either a single type or combination of two or more types of these examples may be used as the functional group.

In the polymerization system, concentration of the component (A) contained in the catalyst composition is preferably in the range of 0.1 mol/L to 0.0001 mol/L.

It is preferable that the first polymerization catalyst composition further contains component (B) and component (C). The component (B) is at least one type of compound selected from the group consisting of a specific ionic compound (B-1) and a specific halogen compound (B-2). The component (C) is a compound represented by the following formula (II):

YR¹ₐR²_{b}R³c (II)

(In formula (II), Y represents a metal selected from the group 1, 2, 12 and 13 elements in the periodic table, R¹ and R² each represent a C₁₋₁₀ hydrocarbon group or a hydrogen atom, R³ represents a C₁₋₁₀ hydrocarbon group, R¹, R² and R³ may be of either the same type as or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.)
It is possible to efficiently manufacture the multi-component copolymer of a conjugated diene compound, a non-conjugated olefin compound and an aromatic vinyl compound by adding the component (B) and the component (C) to the first polymerization catalyst composition.

The ionic compound (B-1) and the halogen compound (B-2) need the component (C) serving as a carbon donor to the component (A) because neither the ionic compound (B-1) nor the halogen compound (B-3) has a carbon atom which can be supplied to the component (A). Further, the first polymerization catalyst composition may include other components contained in a conventional rare-earth element compound-based polymer catalyst composition, e.g. a prompter.
The total content of the component (B) contained in the first polymerization catalyst composition is preferably 0.1 to 50 times as much as the content of the component (A) when compared in mol.

The ionic compound, referred to as (B-1) in the present disclosure, is constituted of a non-coordinating anion and a cation. Examples of the ionic compound (B-1) include an ionic compound capable of being reacted with a rare earth element compound of the compound (A), to generate a cationic transition metal compound.
In this connection, examples of the non-coordinating anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, triphenyl(pentafluorophenyl)borate, [tris(pentafluorophenyl)](phenyl)borate, and tridecahydride-7,8-dicarbaundecaborate. Examples of the cation include carbonium cation, oxonium cation, ammonium cation, phosphonium cation, cycloheptatrienyl cation, and ferroceium cation having transition metal. Specific examples of carbonium cation include trisubstituted carbonium cation such as triphenylcarbonium cation, and tri(substituted phenyl)carbonium cation. Specific examples of the tri(substituted phenyl)carbonium cation include tri(methylphenyl)carbonium cation, and tri(dimethylphenyl)carbonium cation. Specific examples of the ammonium cation include: trialkylammonium cation such as trimethylammonium cation, triethylammonium cation, tripropylammonium cation, tributylammonium cation (e.g. tri(n-butyl)ammonium cation); N,N-dialkylanilinium cation such as N,N-dimethylanilinium cation, N,N-diethylanilinium cation, and N,N-2,4,6-pentamethylanilinium cation; and dialkylammonium cation such as diisopropylammonium cation, and dicyclohexylammonium cation. Specific examples of phosphonium cation include triarylphosphonium cation such as triphenylphosphonium cation, tri(methylphenyl)phosphonium cation, and tri(dimethylphenyl)phosphonium cation. A compound as a combination of a non-coordinating anion and a cation selected from the aforementioned examples, respectively, is preferably used as the ionic compound (B-1). Specific examples of the ionic compound (B-1) include N,N-dimethylanilinium tetrakis(pentafluorophenyl)borate, and triphenylcarbonium tetrakis(pentafluorophenyl)borate. Either a single type or combination of two or more types of the aforementioned examples may be used as the ionic compound (B-1).
The content of the ionic component (B-1) in the first polymerization catalyst composition is preferably 0.1 to 10 times, more preferably approximately 1 times, as much as the content of the component (A) when compared in mol.

The halogen compound, referred to as (B-2) in the present disclosure, is at least one type of halogen compound selected from a Lewis acid, a complex compound of a metal halide and a Lewis base, and an organic compound containing an active halogen. The halogen compound (B-2) is capable of being reacted with a rare earth element compound of the compound (A), to generate a cationic transition metal compound, a halide transition metal compound, or a compound of which transition metal center is deficient in charge.
The total content of the halogen compound (B-2) in the first polymerization catalyst composition is preferably 1 to 5 times as much as the content of the component (A) when compared in mol.

Examples of the Lewis acid include a boron-containing halogen compound such as B(C₆F₅)₃, an aluminum-containing halogen compound such as Al(C₆F₅)₃, and a halogen compound containing a group III, IV, V, VI or VIII element in the periodic table. Preferable examples of the Lewis acid include aluminum halide and organic metal halide. Chlorine or bromine is preferable as the halogen element. Specific examples of the Lewis acid include methylaluminum dibromide, methylaluminum dichloride, ethylaluminum dibromide, ethylaluminum dichloride, butylaluminum dibromide, butylaluminum dichloride, dimethylaluminum bromide, dimethylaluminum chloride, diethylaluminum bromide, diethylaluminum chloride, dibutylaluminum bromide, dibutylaluminum chloride, methylaluminum sesquibromide, methylaluminum sesquichloride, ethylaluminum sesquibromide, ethylaluminum sesquichloride, dibutyltin dichloride, aluminum tribromide, antimony trichloride, antimony pentachloride, phosphorus trichloride, phosphorus pentachloride, tin tetrachloride, titanium tetrachloride, and tungsten hexachloride. Diethylaluminum chloride, ethylaluminum sesquichloride, ethylaluminum dichloride, diethylaluminum bromide, ethylaluminum sesquibromide, and ethylaluminum dibromide are particularly preferable as the Lewis acid among these examples.

Examples of the metal halide which, together with a Lewis base, constitutes a complex compound include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper bromide, copper iodide, silver chloride, silver bromide, silver iodide, gold chloride, gold iodide, and gold bromide. Magnesium chloride, calcium chloride, barium chloride, manganese chloride, zinc chloride, copper chloride are preferable as the metal halide among these examples. Magnesium chloride, manganese chloride, zinc chloride, copper chloride are particularly preferable.

Further, preferable examples of the Lewis base constituting, together with the metal halide, a complex compound include a phosphorus compound, a carbonyl compound, a nitrogen compound, an ether compound, and alcohol. Specifically, acceptable examples of the Lewis base include tributyl phosphate, tris (2-ethylhexyl) phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphneyl malonate, acetic acid, octanoic acid, 2-ethyl-hexanoic acid, oleic acid, stearic acid, benzoic acid, naphthenic acid, versatic acid, triethylamine, N,N-dimethylacetoamide, tetrahydrofuran, diphenyl ether, 2-ethyl-hexyl alcohol, oleyl alcohol, stearyl alcohol, phenol, benzyl alcohol, 1-decanol, and lauryl alcohol. Tris (2-ethylhexyl) phosphate, tricresyl phosphate, acetylacetone, 2-ethyl-hexanoic acid, versatic acid, 2-ethyl-hexyl alcohol, 1-decanol, lauryl alcohol are preferable as the Lewis base among these examples.

0.01 to 30 mol (preferably 0.5 to 10 mol) per 1 mol of the metal halide, of the aforementioned Lewis base, is reacted with the metal halide. Metals remaining in the copolymer can be reduced by using a reactant obtained by the reaction between the metal halide and the Lewis base.

Examples of the organic compound containing active halogen, as the compound (B-2), include benzyl chloride.

Either a single type or combination of two or more types of the aforementioned examples may be used as the halogen compound (B-2).

The component (C) for use in the first polymerization catalyst composition is a compound represented by formula (II) shown below:

YR¹ₐR²_{b}R³_{c} ... (II)

(In formula (II), Y represents a metal selected from the group 1, 2, 12 and 13 elements in the periodic table, R¹ and R² each represent a C₁₋₁₀ hydrocarbon group or a hydrogen atom, R³ represents a C₁₋₁₀ hydrocarbon group, R¹, R² and R³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.)
The component (C) is preferably an organic aluminum compound represented by general formula (III):

AlR¹R²R³ (III)

(In formula (III), R¹ and R² each represent a C₁₋₁₀ hydrocarbon group or a hydrogen atom, R³ represents a C₁₋₁₀ hydrocarbon group, and R¹, R² and R³ may be of either the same type or different types.)
Examples of the organic aluminum compound represented by general formula (III) include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; hydrogenated diethylaluminum, hydrogenated di-n-propylaluminum, hydrogenated di-n-butylaluminum, hydrogenated diisobutylaluminum, hydrogenated dihexylaluminum, hydrogenated diisohexylaluminum, hydrogenated dioctylaluminum, hydrogenated diisooctylaluminum, ethylaluminum dihydride, n-propylaluminum dihydride, and isobutylaluminum dihydride. Triethylaluminum, triisobutylaluminum, hydrogenated diethylaluminum and hydrogenated diisobutylaluminum are preferable as the organic aluminum compound among these examples. Either a single type or combination of two or more types of the aforementioned examples of the organic aluminum compound may be used as the compound (C). The content of the organic aluminum compound (C) in the first polymerization catalyst composition is preferably 1 to 50 times, more preferably approximately 10 times, as much as the content of the component (A) when compared in mol.

The first polymerization catalyst composition preferably further contains component (D), which is a coordinating compound capable of serving as a ligand, in terms of successfully synthesizing copolymer having a high cis-1,4 bond content at a high yield.
Type of the component (D) is not particularly restricted as long as the compound (D) is exchangeable for the functional group represented by AQ¹, AQ², and AQ³ of the component (A). The component (D) preferably has one of OH, NH, SH groups.

Specific examples of the compound (D) as a compound having OH group include aliphatic alcohol, and aromatic alcohol. Specific examples of aliphatic alcohol, aromatic alcohol include 2-ethyl-1-hexanol, dibutylhydroxytoluene, alkylated phenol, 4,4'-thiobis-(6-t-butyl-3-methylphenol), 4,4'-butylidenebis-(6-t-butyl-3-methylphenol), 2,2'-methylenebis-(4-methyl-6-t-butylphenol), 2,2'-methylenebis-(4-ethyl-6-t-butylphenol), 2,6-di-t-4-ethylphenol, 1,1,3-tris-(2-methyl-4-hydroxy-5-t-butylphenyl)butane, n-octadecyl-3 -(4-hydroxy-3,5,-di-t-butylphenyl)propionate, tetrakis[methylene-3-(3,5-di-t-butyl-4-hydroxyphenyl)propionate]methane, dilaurylthiodipropionate, distearylthiodipropionate, and dimyristylyl thiopropionate, with no restriction thereto. Examples of "hindered-phenol" compounds in this connection include triethylene glycol-bis[3-(3-t-butyl-5-methyl-4-hydroxyphenyl)propionate], 1,6-hexanediol-bis[3-(3,5-di-t-butyl-4-4-hydroxyphenyl)propionate], 2,4-bis-(n-octylthio)-6-(4-hydroxy-3,5-di-t-butylanilino)-1,3,5-triazine, pentaerythryl-tetrakis[3-(3,5-di-t-butyl-4-hydroxyphenyl)propionate], 2,2-thiodiethylene-bis[3-(3,5-di-t-butyl-4-hydroxyphenyl)propionate], octadecyl-3-(3,5-di-t-butyl-4-hydroxyphenyl)propionate, N,N'-hexamethylene-bis(3,5-di-t-butyl-4-hydroxy- hydrocinnamic amide), 3,5-t-butyl-4-hydroxybenzylphosphonate-diethyl ester, 1,3,5-trimethyl-2,4,6-tris(3,5-di-t-butyl-4-hydroxybenzyl)benzene, tris-(3,5-di-t-butyl-4-hydroxybenzyl)-isocyanurate, octylated diphenylamine, and 2,4-bis[(octylthio)methyl]-o-cresol. Further, examples of "hydrazine" compounds in this connection include N,N'-bis[3-(3,5-di-t-butyl-4-hydroxyphenyl)propionyl]hydrazine.

Specific examples of the compound (D) having NH group include primary amines such as alkylamine, arylamine and secondary amines. Specific examples of the primary and secondary amines include dimethylamine, diethylamine, pyrrole, ethanolamine, diethanolamine, dicyclohexylamine, N,N'-dibenzylethylenediamine, and bis(2-diphenylphosphinophenyl)amine.

Specific examples of the compound (D) having SH group include aliphatic thiol, aromatic thiol, and compounds represented by following general formulae (VI) and (VII). 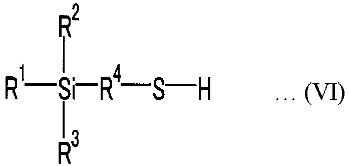 (In formula (VI), R¹, R² and R³ each independently represent -O-CⱼH₂ⱼ₊₁, -(O-CₖH₂ₖ-)ₐ-O-CₘH₂ₘ₊₁, or -CₙH₂ₙ₊₁; at least one of R¹, R² and R³ is -(O-CₖH₂ₖ-)ₐ-O-CₘH₂ₘ₊₁; j, m and n each independently represent an integer in the range of 0 to 12; k and a each independently represent an integer in the range of 1 to 12; and R⁴ represents a C₁₋₁₂, normal/branched/cyclic, saturated/unsaturated alkylene, cycloalkylene, cycloalkylalkylene, cycloalkenylalkylene, alkenylene, cycloalkenylene, cycloalkylalkenylene, cycloalkenylalkenylene, arylene, or aralkylene goup.) Specific examples of the compounds represented by general formula (VI) include (3-mercaptopropyl)trimethoxysilane, (3 -mercaptopropyl)triethoxysilane, (3-mercaptopropyl)methyldimethoxysilane, (mercaptomethyl)dimethylethoxysilane, and (mercaptomethyl)trimethoxysilane. 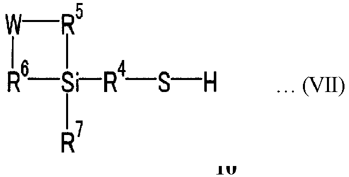 (In general formula (VII), W represents -NR⁸-, -O-, or -CR⁹R¹⁰- (R⁸ and R⁹ each represent -CₚH₂ₚ₊₁, R¹⁰ represents -C_{q}H_{2q+1}, and p and q each independently represent an integer in the range of 0 to 20); R⁵ and R⁶ each independently represent -M-CᵣH₂ᵣ-(M represents -O- or -CH₂-, r represents an integer in the range of 1 to 20); R⁷ represents -O-CⱼH₂ⱼ₊₁, -(O-CₖH₂ₖ-)ₐ-O-CₘH₂ₘ₊₁, or -CₙH₂ₙ₊₁; j, m and n each independently represent an integer in the range of 0 to 12; k and a each independently represent an integer in the range of 1 to 12; and R⁴ represents a C₁₋₁₂, normal/branched/cyclic, saturated/unsaturated alkylene, cycloalkylene, cycloalkylalkylene, cycloalkenylalkylene, alkenylene, cycloalkenylene, cycloalkylalkenylene, cycloalkenylalkenylene, arylene, or aralkylene goup.)
Specific examples of the compound represented by general formula (VII) include 3-mercaptopropyl(ethoxy)-1,3-dioxa-6-methylaza-2-silacyclooctane, 3-mercaptopropyl(ethoxy)-1,3-dioxa-6-butylaza-2-silacyclooctane, and 3-mercaptopropyl(ethoxy)-1,3-dioxa-6-dodecylaza-2-silacyclooctane.

The coordinating compound of the component (D) is preferably a compound having a cyclopentadiene skeleton.
The compound having a cyclopentadiene skeleton preferably has a group selected from cyclopentadienyl, indenyl and fluorenyl groups. Specifically, the compound having a cyclopentadiene skeleton is at least one compound selected from substituted/unsubstituted cyclopentadiene, substituted/unsubstituted indene, and substituted/unsubstituted fluorene. The group is most preferably substituted/unsubstituted indenyl group in terms of obtaining high catalytic activity. The catalytic activity can be enhanced without using toluene, which causes significant impacts on the environment, as a solvent in the polymerization process when the substituted/unsubstituted indenyl group is used.

Examples of the substituent group of a substituted cyclopentadiene compound, a substituted indene compound, and a substituted fluorene compound include hydrocarbyl group and metalloid group. The number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, phenyl, and benzyl groups. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl.
Examples of the substituted cyclopentadiene compound include pentamethylcyclopentadiene, tetramethylcyclopentadiene, isopropylcyclopentadiene, (trimethylsilyl)tetramethylcyclopentadiene, and (1-benzyldimethylsilyl)cyclopenta[I]phenanthrene.

Examples of the substituted indene compound include 2-phenyl-1H-indene, 3-benzyl-1H-indene, 3-methyl-2-phenyl-1H-indene, 3-benzyl-2-phenyl-1H-indene, 1-benzyl-1H-indene, 1-methyl-3-dimethylbenzylsilyl-indene, 1,3-bis(t-butyldimethylsilyl)-indene, (1-benzyldimethylsilyl-3-cyclopentyl)indene, and (1-benzyl-3-t-butyldimethylsilyl)indene,. In particular, 3-benzyl-1H-indene and 1-benzyl-1H-indene are preferable among these examples in terms of making the molecular weight distribution small.

Examples of the substituted fluorene compound include trimethylsilylfluorene, and isopropylfluorene.

Examples of the compound having indenyl group include indene, 1-methylindene, 1-ethylindene, 1-benzylindene, 2-phenylindene, 2-methylindene, 2-ethylindene, 2-benzylindene, 3-methylindene, 3-ethylindene, and 3-benzylindene. A substituted phenylindenyl compound is preferable for use among these examples.

It is preferable to add the component (D) by an amount of preferably 0.01 mol to 10 mol, most preferably 0.1 mol to 1.2 mol, with respect to 1 mol of the rare earth element compound of the component (A). Polymerization of monomers may not proceed in a satisfactory manner when the added amount of the component (D) is less than 0.01 mol. The added amount of the component (D) is preferably equivalent to but may exceed the amount (1.0 mol) of the rare earth element compound. The added amount of the component (D) exceeding 10 mol, however, is not preferable because of too much waste of the material.

### -- Second polymerization catalyst composition --

Next, the second polymerization catalyst composition will be described.

The second polymerization catalyst composition is a polymerization catalyst composition containing at least one type of complex selected from the group consisting of:
a metallocene complex represented by following general formula (IX) 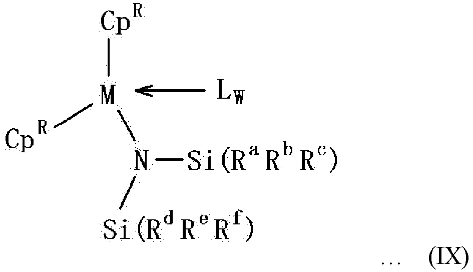 (In formula (IX), M represents lanthanoid, scandium or yttrium; Cp^{R}s each independently represent unsbstituted/substituted indenyl; R^{a} to R^{f} each independently represent a C₁₋₃ alkyl group or hydrogen atom; L represents a neutral Lewis base; and w represents an integer in the range of 0 to 3);
a metallocene complex represented by following general formula (X) 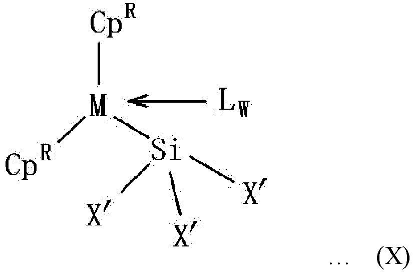
(In formula (X), M represents lanthanoid, scandium or yttrium; Cp^{R}s each independently represent unsbstituted/substituted indenyl; X' represents hydrogen atom, halogen atom, alkoxide, thiolate, amide, silyl, or a C₁₋₂₀ hydrocarbon group; L represents a neutral Lewis base; and w represents an integer in the range of 0 to 3); and a half metallocene cation complex represented by following general formula (XI) 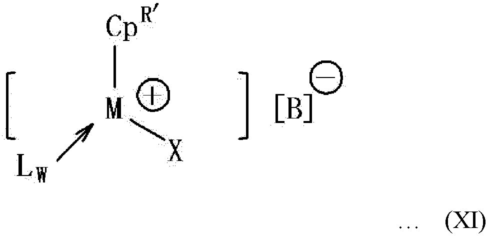 (In formula (XI), M represents a lanthanoid element, scandium or yttrium; Cp^{R'} represents unsbstituted/substituted cyclopentadienyl, indenyl or fluorenyl; X' represents hydrogen atom, halogen atom, alkoxide, thiolate, amide, silyl, or a C₁₋₂₀ hydrocarbon group; L represents a neutral Lewis base; w represents an integer in the range of 0 to 3); and [B]⁻ represents a non-coordinating anion).

The second polymerization catalyst composition may further include other components included in a conventional metallocene complex-containing polymerization catalyst composition, e.g. a prompter. In the present disclosure, a "metallocene complex" represents a complex compound in which at least one cyclopentadienyl or derivative thereof is bonded to a core metal. In this connection, a metallocene complex in which only a single cyclopentadienyl or derivative thereof is bonded to a core metal may occasionally be referred to as a "half metallocene complex" in particular.
The concentration of the complex contained in the second polymerization catalyst composition is preferably in the range of 0.1 mol/L to 0.0001 mol/L in the polymerization reaction system.

Cp^{R}s are unsbstituted/substituted indenyls in the metallocene complexes represented by general formula (IX) and general formula (X). Cp^{R} having an indenyl ring as the base skeleton may be represented as C₉H_{7-X}R_{X} or C₉H_{11-X}R_{X}, wherein X is an integer in the range of 0 to 7 or 0 to 11; Rs preferably each represent hydrocarbyl or metalloid group; and the number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, phenyl, and benzyl groups. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl. Specific examples of the substituted indenyl include 2-phenylindenyl, and 2-methylindenyl. Cp^{R}s in general formula (IX) and general formula (X) may be of either the same type or different types.

Cp^{R'} is unsbstituted/substituted cyclopentadienyl, indenyl, fluorenyl group in the half metallocene cation complex represented by general formula (XI). Unsbstituted/substituted indenyl group is preferable as Cp^{R'} among these examples. Cp^{R'} having a cyclopentadienyl ring as the base skeleton is represented as C₅H_{5-X}R_{X}, wherein X is an integer in the range of 0 to 5; Rs preferably each independently represent hydrocarbyl or metalloid group; and the number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, phenyl, and benzyl groups. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl. Specific examples of Cp^{R'} having a cyclopentadienyl ring as the base skeleton include compounds represented by the following structural formulae: 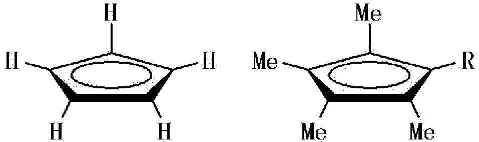 (In these structural formulae, R represents hydrogen atom, methyl or ethyl group.)
Cp^{R'} having an indenyl ring as the base skeleton, as well as preferable examples thereof, in general formula (XI) is defined in the same manner as Cp^{R} in general formula (IX).

Cp^{R'} having a fluorenyl ring as the base skeleton in general formula (XI) is represented as C₁₃H_{9-X}R_{X} or C₁₃H_{17-X}R_{X}, wherein X is an integer in the range of 0 to 9 or 0 to 17; Rs preferably each independently represent hydrocarbyl or metalloid group; and the number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, phenyl, and benzyl groups. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl.

The core metal M in each of general formulae (IX), (X) and (XI) is a lanthanoid element, scandium or yttrium. The lanthanoid elements include elements having atomic numbers 57-71 in the periodic table and any of these elements is acceptable. Preferable examples of the core metal M include samarium Sm, neodymium Nd, praseodymium Pr, gadolinium Gd, cerium Ce, holmium Ho, scandium Sc, and yttrium Y.

The metallocene complex represented by general formula (IX) includes a silylamide ligand [-N(SiR₃)₂]. R groups included in the silylamide ligand (i.e. R^{a} to R^{f} in general formula (IX)) each independently represent a C₁₋₃ alkyl group or a hydrogen atom. It is preferable that at least one of R^{a} to R^{f} is a hydrogen atom. The catalyst can be easily synthesized and a non-conjugated olefin compound and an aromatic vinyl compound are easily introduced due to relatively little hindrance around the silicon atom when at least one of R^{a} to R^{f} is a hydrogen atom. For similar reasons, it is more preferable that at least one of R^{a} to R^{c} is a hydrogen atom and at least one of R^{d} to R^{f} is a hydrogen atom. Methyl group is preferable as the alkyl group.

The metallocene complex represented by general formula (X) includes a silyl ligand [-SiX'₃]. X' groups included in the silyl ligand [-SiX'₃], as well as preferable examples thereof, are defined in the same manner as X group in general formula (XI) described below.

In general formula (XI), X is a group selected from the group consisting of hydrogen atom, halogen atom, alkoxide, thiolate, amide, silyl, and a C₁₋₂₀ hydrocarbon groups. Examples of the alkoxide group include: aliphatic alkoxy group such as methoxy, ethoxy, propoxy, n-butoxy, isobutoxy, sec-butoxy, and tert-butoxy; and aryloxide group such as phenoxy, 2,6-di-tert-butylphenoxy, 2,6-diisopropylphenoxy, 2,6-dineopentylphenoxy, 2-tert-butyl-6-isopropylphenoxy, 2-tert-butyl-6-neopentylphenoxy, and 2-isopropyl-6-neopentylphenoxy. 2,6-di-tert-butylphenoxy is preferable as the alkoxide group among these examples.

Examples of the thiolate group represented by X in general formula (XI) include: aliphatic thiolate group such as thiomethoxy, thioethoxy, thiopropoxy, n-thiobutoxy, thoisobutoxy, sec-thiobutoxy, and tert-thiobutoxy; and arylthiolate group such as thiophenoxy, 2,6-di-tert-butylthiophenoxy, 2,6-diisopropylthiophenoxy, 2,6-dineopentylthiophenoxy, 2-tert-butyl-6-isopropylthiophenoxy, 2-tert-butyl-6-thioneopentylphenoxy, 2-isopropyl-6-thioneopentylphenoxy, and 2,4,6-triisopropylthiophenoxy. 2,4,6-triisopropylthiophenoxy is preferable as the thiolate group among these examples.

Examples of the amide group represented by X in general formula (XI) include: aliphatic amide group such as dimethylamide, diethylamide, and diisopropylamide; arylamide group such as phenylamide, 2,6-di-tert-butylphenylamide, 2,6-diisopropylphenylamide, 2,6-dineopentylphenylamide, 2-tert-butyl-6-isopropylphenylamide, 2-tert-butyl-6-neopentylphenylamide, 2-isopropyl-6-neopentylphenylamide, and 2,4,6-tri-tert-butylphenylamide; and bis(trialkylsily)lamide such as bis(trimethylsilyl)amide. Bis(trimethylsilyl)amide is preferable as the amide group among these examples.

Examples of the silyl group represented by X in general formula (XI) include trimethylsilyl, tris(trimethylsilyl)silyl, bis(trimethylsilyl)methylsilyl, trimethylsilyl(dimethyl)silyl, and (triisopropylsilyl)bis(trimethylsilyl)silyl. Tris(trimethylsilyl)silyl is preferable as the silyl group among these examples.

Acceptable examples of the halogen atom represented by X in general formula (XI) include fluorine, chlorine, bromine and iodine atoms. Chlorine or bromine atom is preferable. Specific examples of the C₁₋₂₀ hydrocarbon group represented by X in general formula (XI) include: normal/branched aliphatic hydrocarbon group such as methyl, ethyl, n-propyl, isopropyl, n-butyl, isobutyl, sec-butyl, tert-butyl, neopentyl, hexyl, octyl; aromatic hydrocarbon group such as phenyl, tolyl, naphthyl; aralykyl group such as benzyl; a hydrocarbon group containing silicon atom such as trimethylsilylmethyl, and bis(trimethylsilyl)methyl. Methyl, ethyl, isopropyl, and trimethylsilylmethyl are preferable as the C₁₋₂₀ hydrocarbon group among these examples.

Bistrimethylsilylamide or a C₁₋₂₀ hydrocarbon group is preferable as X in general formula (XI).

Examples of the non-coordinating anion represented by [B]⁻ in general formula (XI) include quadrivalent boron anion. Specific examples of the quadrivalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, triphenyl(pentafluorophenyl)borate, [tris(pentafluorophenyl)phenyl]borate, and tridecahydride-7,8-dicarbaundecaborate. Tetrakis(pentafluorophenyl)borate is preferable as the quadrivalent boron anion among these examples.

The metallocene complexes represented by general formulae (IX) and (X) and the half metallocene cation complex represented by general formula (XI) each further include 0 to 3, preferably 0 to 1, neutral Lewis base L. Examples of the neutral Lewis base L include tetrahydrofuran, diethyl ether, dimethylaniline, trimethylphosphine, lithium chloride, neutral olefin, and neutral diolefin. The neutral Lewis bases L may be of either the same type or different types when the complex includes a plurality of neutral Lewis bases L.

The metallocene complexes represented by general formulae (IX) and (X) and the half metallocene cation complex represented by general formula (XI) may each exist as any of monomer, dimer or another type of multimer.

The metallocene complex represented by general formulae (IX) can be obtained by, for example, reacting lanthanoid trishalide, scandium trishalide or yttrium trishalide with an indenyl salt (such as potassium or lithium indenyl salt) and a bis(trialkylsilyl)amide salt (such as potassium or lithium salt of bis(trialkylsilyl)amide) in a solvent. The reaction temperature may be set around the room temperature, which allows production in a mild condition. The reaction time may be set as desired and is generally in the range of a few hours to a few days. Type of the reaction solvent is not particularly limited but preferably a solvent capable of dissolving the raw materials and a reaction product. For example, toluene can be used. An example of a reaction for obtaining the metallecene complex represented by general formula (IX) is shown below.

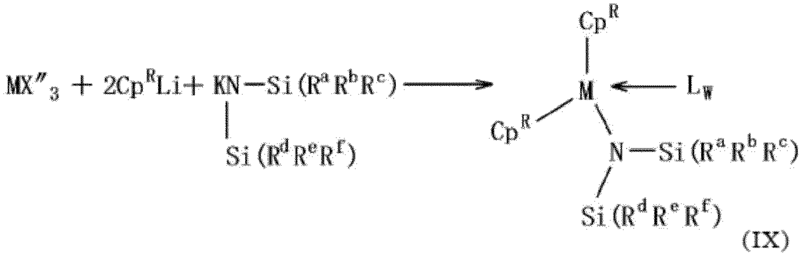

### (In the reaction example above, X" represents a halide.)

The metallocene complex represented by general formulae (X) can be obtained by, for example, reacting lanthanoid trishalide, scandium trishalide or yttrium trishalide with an indenyl salt (such as potassium or lithium indenyl salt) and a silyl salt (such as potassium or lithium silyl salt) in a solvent. The reaction temperature may be set around the room temperature, which allows production in a mild condition. The reaction time may be set as desired and is generally in the range of a few hours to a few days. Type of the reaction solvent is not particularly limited but preferably a solvent capable of dissolving the raw materials and a reaction product. For example, toluene can be used. An example of a reaction for obtaining the metallecene complex represented by general formula (X) is shown below. 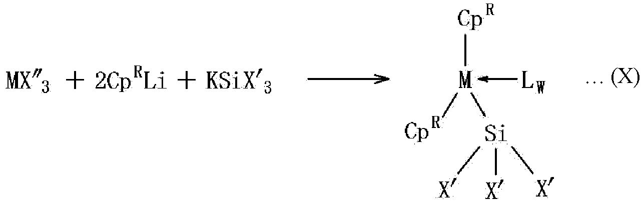 (In the reaction example above, X" represents a halide.)

The half metallocene cation complex represented by general formulae (XI) can be obtained, for example, by a reaction shown below.

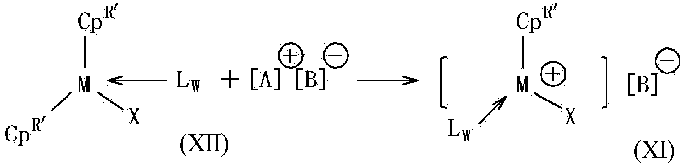

In the compound represented by general formula (XII), M represents a lanthanoid element, scandium or yttrium; Cp^{R'}s each independently represent unsbstituted/substituted cyclopentadienyl, indenyl or fluorenyl; and X represents hydrogen atom, halogen atom, alkoxide, thiolate, amide, silyl, or a C₁₋₂₀ hydrocarbon group. L represents a neutral Lewis base and w represents an integer in the range of 0 to 3. [A]⁺ represents a cation and [B]⁻ represents a non-coordinating anion in an ionic compound represented by [A]⁺ [B]⁻.

Examples of the cation represented by [A]⁺ include carbonium cation, oxonium cation, amine cation, phosphonium cation, cycloheptatrienyl cation, and ferrocenium cation having transition metal. Examples of the carbonium cation include trisubstituted carbonium cation such as triphenylcarbonium cation, and tri(substituted phenyl)carbonium cation. Specific examples of the tri(substituted phenyl)carbonium cation include tri(methylphenyl)carbonium cation. Examples of the amine cation include: trialkylammonium cation such as trimethylammonium cation, triethylammonium cation, tripropylammonium cation, tributylammonium cation; N,N-dialkylanilinium cation such as N,N-dimethylanilinium cation, N,N-diethylanilinium cation, N,N-2,4,6-pentamethylanilinium cation; dialkylammonium cation such as diisopropylammonium cation, and dicyclohexylammonium cation. Examples of phosphonium cation include triarylphosphonium cation such as triphenylphosphonium cation, tri(methylphenyl)phosphonium cation, and tri(dimethylphenyl)phosphonium cation. N,N-dialkylanilinium cation or carbonium cation is preferable and N,N-dialkylanilinium cation is particularly preferable as [A]⁺ among these examples.

The ionic compound represented by general formula [A]⁺ [B]⁻ for use in the aforementioned reaction is, for example, a compound obtained by combining a non-coordinting anion and a cation respectively selected from the aforementioned examples and preferably N,N-dimethylanilinium tetrakis(pentafluorophenyl)borate, and triphenylcarbonium tetrakis(pentafluorophenyl)borate. The ionic compound represented by general formula [A]⁺ [B]⁻ is added to the metallocene complex by an amount preferably 0.1 to 10 times, more preferably approximately 1 times, as much as the amount of the metallocene complex when compared in mol. In the case where the half metallocene cation complex represented by general formula (XI) is used for a polymerization reaction, the half metallocene cation complex represented by general formula (XI) may be directly provided into a polymerization reaction system or, alternatively, the half metallocene cation complex represented by general formula (XI) may be formed in a polymerization reaction system by providing a compound represented by general formula (XII) and the ionic compound represented by general formula [A]⁺ [B]⁻ for use in the aforementioned reaction, respectively, in the polymerization reaction system. Further alternatively, the half metallocene cation complex represented by general formula (XI) may be formed in a polymerization reaction system by using the metallocene complex represented by general formula (IX) or general formula (X) and the ionic compound represented by general formula [A]⁺ [B]⁻ in a combined manner in the polymerization reaction system.

Structures of the metallocene complex represented by general formula (IX) or general formula (X) and the half metallocene cation complex represented by general formula (XI) are each preferably determined through x-ray structural analysis.

The prompter applicable to the second polymerization catalyst composition can be selected according to necessity from components used as prompters in a conventional polymerization catalyst composition containing a metallocene complex. Preferable examples of the prompter include aluminoxane, an organic aluminum compound, the ionic compounds described above. Either a single type or combination of two or more types of these examples may be used as the prompter.

The aforementioned aluminoxane is preferably alkylaluminoxane and examples thereof include methylaluminoxane (MAO), and modified methylaluminoxane. "MMAO-3A", manufactured by Tosoh Finechem Corporation is preferable as the modified methylaluminoxane. Provided that "Al/M" represents an element ratio of the aluminum element Al of the aluminoxane with respect to the core metal M of the metallocene complex, the content of the aluminoxane in the second polymerization catalyst composition is set such that the element ratio Al/M is in the range of 10 to 1000 approximately, preferably around 100.

On the other hand, the aforementioned organic aluminum compound is preferably an organic aluminum compound represented by general formula AlRR'R" (in the formula, R and R' each independently represent a C₁₋₁₀ hydrocarbon group or a hydrogen atom and R" represents a C₁₋₁₀ hydrocarbon group). Examples of the organic aluminum compound include trialkylaluminum, dialkylaluminum chloride, alkylaluminum dichloride, and dialkylaluminum hydride. Trialkylaluminum is preferable as the organic aluminum compound among these examples. Examples of trialkylaluminum include triethylaluminum, and triisobutylaluminum. The content of the organic aluminum compound in the second polymerization catalyst composition is preferably 1 to 50 times, more preferably around 10 times, as much as the content of the metallocene complex in the composition when compared in mol.

The cis content of 1,4-polyisoprene and/or the molecular weight of a resulting polymer can be increased by using each of the metallocene complex represented by general formula (IX) and/or the metallocene complex represented by general formula (X), and the half metallocene cation complex represented by general formula (XI) with an appropriate prompter in combination in the second polymerization catalyst composition.

### -- Third polymerization catalyst composition --

Next, the third polymerization catalyst composition will be described.

The third polymerization catalyst composition is a compound containing a rare earth element and examples thereof include a polymerization catalyst composition containing a metallocene-based composite catalyst represented by the following formula (XIII):

RₐMX_{b}QY_{b} (XIII)

(In formula (XIII), Rs each independently represent unsubstituted/substituted indenyl; M is coordinated with Rs; M represents a lanthanoid element, scandium or yttrium; Xs each independently represent a C₁₋₂₀ hydrocarbon group; M and Q are µ-coordinated with X; Q represents a group 13 element in the periodic table; Ys each independently represent a C₁₋₂₀ hydrocarbon group or a hydrogen atom; Q is coordinated with Y; and a = b = 2).

Preferable examples of the metallocene-based composite catalyst represented by formula (XIII) include a metallocene-based composite catalyst represented by the following formula (XIV): 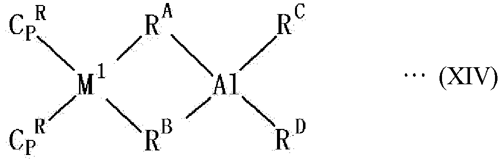 (In formula (XIV), M¹ represents a lanthanoid element, scandium or yttrium; Cp^{R}s each independently represent unsubstituted/substituted indenyl; R^{A} and R^{B} each independently represent a C₁₋₂₀ hydrocarbon group; M¹ and Al are µ-coordinated with R^{A} and R^{B}; and R^{C} and R^{D} each independently represent a C₁₋₂₀ hydrocarbon group or a hydrogen atom.)
A targeted polymer can be manufactured by using the metallocene-based polymerization catalyst described above. Further, it is possible to reduce an amount of alkylaluminum for use in the polymer synthesis or even eliminate the alkylaluminum by using the metallocene-based composite catalyst described above, for example, a catalyst which has been combined with aluminum catalyst in advance to be a composite. It should be noted in this connection that a large amount of alkylaluminum is needed during the polymer synthesis if the conventional catalyst system is employed. For example, alkylaluminum must be used by an amount at least 10 times as much as the chemically equivalent amount of a relevant metal catalyst in the conventional catalyst system. In contrast, in the case of using the metallocene-based composite catalyst described above, a good catalytic effect is demonstrated by adding alkylaluminum by an amount around 5 times as much as the chemically equivalent amount of the metal catalyst.

With regard to the metallocene-based composite catalyst represented by formula (XIII), the metal M is a lanthanoid element, scandium or yttrium. The lanthanoid elements include the fifteen elements having atomic numbers 57-71 and any of these elements is acceptable. Preferable examples of the core metal M include samarium Sm, neodymium Nd, praseodymium Pr, gadolinium Gd, cerium Ce, holmium Ho, scandium Sc, and yttrium Y.

In formula (XIII), Rs each independently represent unsubstituted/substituted indenyl and M is coordinated with Rs. Specific examples of the substituted indenyl group include 1,2,3-trimethyl indenyl, heptamethylindenyl, and 1,2,4,5,6,7-hexamethylindenyl.

In formula (XIII), Q represents a group 13 element in the periodic table and specific examples thereof include boron, aluminum, gallium, indium, and thallium.

In formula (XIII), Xs each independently represent a C₁₋₂₀ hydrocarbon group and M and Q are µ-coordinated with X. Examples of the C₁₋₂₀ hydrocarbon group include methyl, ethyl, propyl, butyl, pentyl, hexyl, heptyl, octyl, decyl, dodecyl, tridecyl, tetradecyl, pentadecyl, hexadecyl, heptadecyl, and stearyl. The expression that "M and Q are µ-coordinated with X " represents that M and Q are coordinated with X in a crosslinking manner.

In formula (XIII), Ys each independently represent a C₁₋₂₀ hydrocarbon group or a hydrogen atom and Q is coordinated with Y. In this connection, examples of the C₁₋₂₀ hydrocarbon group include methyl, ethyl, propyl, butyl, pentyl, hexyl, heptyl, octyl, decyl, dodecyl, tridecyl, tetradecyl, pentadecyl, hexadecyl, heptadecyl, and stearyl.

In formula (XVI), the metal M¹ is a lanthanoid element, scandium or yttrium. The lanthanoid elements include the fifteen elements having atomic numbers 57-71 and any of these elements is acceptable. Preferable examples of the core metal M¹ include samarium Sm, neodymium Nd, praseodymium Pr, gadolinium Gd, cerium Ce, holmium Ho, scandium Sc, and yttrium Y.

In formula (XIV), Cp^{R}s are unsbstituted/substituted indenyls. Cp^{R} having an indenyl ring as the base skeleton may be represented as C₉H_{7-X}R_{X} or C₉H_{11-X}R_{X}, wherein X is an integer in the range of 0 to 7 or 0 to 11; Rs preferably each independently represent hydrocarbyl or metalloid group; and the number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, phenyl, and benzyl groups. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl.
Specific examples of the substituted indenyl include 2-phenylindenyl, and 2-methylindenyl. The two Cp^{R}s in general formula (XIV) may be of either the same type or different types.

In formula (XIV), R^{A} and R^{B} each independently represent a C₁₋₂₀ hydrocarbon group and M¹ and Al are µ-coordinated with R^{A} and R^{B}. In this connection, examples of the C₁₋₂₀ hydrocarbon group include methyl, ethyl, propyl, butyl, pentyl, hexyl, heptyl, octyl, decyl, dodecyl, tridecyl, tetradecyl, pentadecyl, hexadecyl, heptadecyl, and stearyl. The expression that "M¹ and Al are µ-coordinated with R^{A} and R^{B}" represents that M¹ and Al are coordinated with R^{A} and R^{B} in a crosslinking manner.

In formula (XIV), R^{C} and R^{D} each independently represent a C₁₋₂₀ hydrocarbon group or a hydrogen atom. In this connection, examples of the C₁₋₂₀ hydrocarbon group include methyl, ethyl, propyl, butyl, pentyl, hexyl, heptyl, octyl, decyl, dodecyl, tridecyl, tetradecyl, pentadecyl, hexadecyl, heptadecyl, and stearyl.

The metallocene-based composite catalyst described above can be obtained by reacting a metallocene complex represented by the following formula (XV) with an organic aluminum compound represented by AlR^{K}R^{L}R^{M} in a solvent. 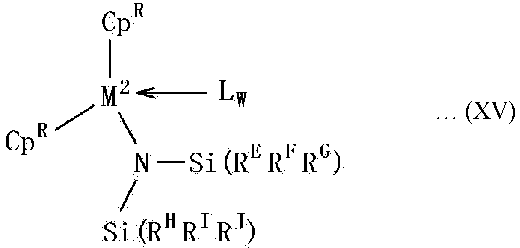 (In formula (XV), M² represents a lanthanoid element, scandium or yttrium; Cp^{R}s each independently represent unsbstituted/substituted indenyl; R^{E} to R^{J} each independently represent a C₁₋₃ alkyl group or a hydrogen atom; L represents a neutral Lewis base; and w represents an integer in the range of 0 to 3).
The reaction temperature may be set around the room temperature, which allows production in a mild condition. The reaction time may be set as desired and is generally in the range of a few hours to a few days. Type of the reaction solvent is not particularly limited but preferably a solvent capable of dissolving the raw materials and a reaction product. For example, toluene or hexane can be used. The structure of the metallocene-based composite catalyst described above is preferably determined through ¹H-NMR or x-ray structural analysis.

In the metallocene complex represented by formula (XV), Cp^{R}s each independently represent unsbstituted/substituted indenyl and are defined in the same manner as Cp^{R}s in formula (XIV); and the metal M² is a lanthanoid element, scandium or yttrium and defined in the same manner as the metal M¹ in formula (XIV).

The metallocene complex represented by formula (XV) includes a silylamide ligand [-N(SiR-₃)₂]. R groups included in the silylamide ligand (i.e. R^{E} to R^{J} in general formula (XV) each independently represent a C₁₋₃ alkyl group or a hydrogen atom. It is preferable that at least one of R^{E} to R^{J} is a hydrogen atom. The catalyst can be easily synthesized when at least one of R^{E} to R^{J} is a hydrogen atom. For the same reasons, it is more preferable that at least one of R^{E} to R^{G} is a hydrogen atom and at least one of R^{H} to R^{J} is a hydrogen atom. Methyl group is preferable as the alkyl group.

The metallocene complex represented by formula (XV) further includes 0 to 3, preferably 0 to 1, neutral Lewis base L. Examples of the neutral Lewis base L include tetrahydrofuran, diethyl ether, dimethylaniline, trimethylphosphine, lithium chloride, neutral olefin, and neutral diolefin. The neutral Lewis bases L may be of either the same type or different types when the complex includes a plurality of neutral Lewis bases L.

The metallocene complex represented by general formula (XV) may exist as any of monomer, dimer or another type of multimer.

The organic aluminum compound for use in generation of the metallocene-based composite catalyst described above is represented by AlR^{K}R^{L}R^{M}, wherein R^{K} and R^{L} each independently represent a monovalent C₁₋₂₀ hydrocarbon group or a hydrogen atom; R^{M} represents a monovalent C₁₋₂₀ hydrocarbon group; and R^{M} may be of either the same type as or a different type from R^{K} and R^{L}. Examples of the monovalent C₁₋₂₀ hydrocarbon group include methyl, ethyl, propyl, butyl, pentyl, hexyl, heptyl, octyl, decyl, dodecyl, tridecyl, tetradecyl, pentadecyl, hexadecyl, heptadecyl, and stearyl.

Specific examples of the organic aluminum compound include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; hydrogenated diethylaluminum, hydrogenated di-n-propylaluminum, hydrogenated di-n-butylaluminum, hydrogenated diisobutylaluminum, hydrogenated dihexylaluminum, hydrogenated diisohexylaluminum, hydrogenated dioctylaluminum, hydrogenated diisooctylaluminum; ethylaluminum dihydride, n-propylaluminum dihydride, and isobutylaluminum dihydride. Triethylaluminum, triisobutylaluminum, hydrogenated diethylaluminum and hydrogenated diisobutylaluminum are preferable as the organic aluminum compound among these examples. Either a single type or combination of two or more types of these examples may be used as the organic aluminum compound. An amount of the organic aluminum compound for use in generation of the metallocene-based composite catalyst is preferably 1 to 50 times, more preferably approximately 10 times, as much as the amount of the metallocene complex when compared in mol.

The third polymerization catalyst composition may be composed of the metallocene-based composite catalyst described above and a boron anion. Further, the third polymerization catalyst composition preferably also includes other components, e.g. a prompter, contained in a conventional polymerization catalyst composition containing a metallocene-based catalyst. A catalyst composed of the metallocene-based composite catalyst and a boron anion is occasionally referred to as a "two-component catalyst". It is possible to control contents of respective monomer components in a resulting polymer as desired by using the third polymerization catalyst composition because the third polymerization catalyst composition contains a boron anion, as well as the metallocene-based composite catalyst.

Specific examples of the boron anion constituting a two-component catalyst as the third polymerization catalyst composition include a quadrivalent boron anion. Examples of the quadrivalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, triphenyl(pentafluorophenyl)borate, [tris(pentafluorophenyl)](phenyl)borate, and tridecahydride-7,8-dicarbaundecaborate. Tetrakis(pentafluorophenyl)borate is preferable as the quadrivalent boron anion among these examples.

The boron anion can be used as an ionic compound in which the boron anion is combined with a cation. Examples of the cation include carbonium cation, oxonium cation, amine cation, phosphonium cation, cycloheptatrienyl cation, and ferroceium cation having transition metal. Specific examples of carbonium cation include trisubstituted carbonium cation such as triphenylcarbonium cation, and tri(substituted phenyl)carbonium cation. Specific examples of the tri(substituted phenyl)carbonium cation include tri(methylphenyl)carbonium cation. Specific examples of the amine cation include: trialkylammonium cation such as trimethylammonium cation, triethylammonium cation, tripropylammonium cation, tributylammonium cation; N,N-dialkylanilinium cation such as N,N-dimethylanilinium cation, N,N-diethylanilinium cation, and N,N-2,4,6-pentamethylanilinium cation; and dialkylammonium cation such as diisopropylammonium cation, and dicyclohexylammonium cation. Specific examples of phosphonium cation include triarylphosphonium cation such as triphenylphosphonium cation, tri(methylphenyl)phosphonium cation, tri(dimethylphenyl)phosphonium cation, and the like. N,N-dialkylanilinium cation and carbonium cation are preferable and N,N-dialkylanilinium cation is particularly preferable as the cation among these examples. Accordingly, N,N-dimethylanilinium tetrakis(pentafluorophenyl)borate, and triphenylcarbonium tetrakis(pentafluorophenyl)borate are preferable as the ionic compound. The ionic compound composed of the boron anion and the cation is preferably added by an amount 0.1 to 10 times, more preferably approximately 1 times, as much as the amount of the metallocene-based composite catalyst when compared in mol.

However, the metallocene-based composite catalyst represented by formula (XIV) cannot be synthesized when a boron anion exists in a reaction system for reacting a metallocene complex represented by formula (XV) with an organic aluminum compound. Accordingly, preparation of the third polymerization catalyst composition requires synthesizing the metallocene-based composite catalyst in advance, isolating and purifying the metallocene-based composite catalyst thus synthesized, and then combining the metallocene-based composite catalyst with a boron anion.

Preferable examples of the prompter which may be used for the third polymerization catalyst composition include aluminoxane, as well as the aforementioned organic aluminum compound represented by AlR^{K}R^{L}R^{M}. Alkylaluminoxane is preferable as the aluminoxane and examples thereof include methylaluminoxane (MAO), and modified methylaluminoxane. "MMAO-3A", manufactured by Tosoh Finechem Corporation is preferable as the modified methylaluminoxane. Either a single type or combination of two or more types of these examples may be used as the aluminoxane.

### (Coupling process)

Coupling process is a process of carrying out a reaction (a coupling reaction) for modifying at least a portion, e.g. a terminal end, of a polymer chain of the multi-component copolymer obtained by the polymerization process described above.

The coupling reaction of the coupling process is preferably carried out when the polymerization reaction is fully completed.

Type of a coupling agent for use in the coupling reaction is not particularly restricted and can be appropriately selected according to the purpose. Examples of the coupling agent include: (i) a tin-containing compound such as bis(maleic acid-1-octadecyl)dioctyl tin (IV); (ii) an isocyanate compound such as 4,4'-diphenylmethane diisocyanate; and (iii) an alkoxysilane compound such as glycidyl propyltrimethoxysilane. Either a single type or combination of two or more types of these examples may be used as the coupling agent.

Bis(maleic acid-1-octadecyl)dioctyl tin (IV) is preferable as the coupling agent among these examples in terms of high reaction efficiency and relatively little gel generation. The number average molecular weight (Mn) can be increased as a result of carrying out the coupling reaction.

### (Rinsing process)

Rinsing process is a process of rinsing a multi-component copolymer obtained by the aforementioned polymerization process. Type of a solvent for use in the rinsing process is not particularly restricted and can be appropriately selected according to the purpose. Examples of the solvent include methanol, ethanol, and isopropanol. An acid (such as hydrochloric acid, sulfuric acid, nitric acid) may be added to such a solvent as described above when a Lewis acid-derived catalyst is used as the polymerization catalyst in particular. An amount to be added, of the acid, is preferably 15 mol % or less with respect to the solvent. Addition of the acid by an amount exceeding 15 mol % with respect to the solvent may cause the acid to remain in polymer, possibly adversely affecting mixture, kneading and a vulcanization reaction.

An amount of catalyst residue in copolymer can be decreased to an appropriate level by the rinsing process.

### < Rubber member >

The rubber composition of the present disclosure includes at least the aforementioned multi-component copolymer and optionally a filler, a crosslinking agent and other components, e.g. a rubber component other than the multi-component copolymer of the present disclosure.

The rubber composition of the present disclosure is characterized in that it contains the multi-component copolymer of the present disclosure. As a result, the rubber composition of the present disclosure can have satisfactory low-heat generation property and high wear resistance.

An amount of the multi-component copolymer to be blended (a content of the multi-component copolymer) in the rubber component is not particularly restricted and can be appropriately selected according to the purpose but is preferably in the range of ≥ 30 mass % with respect to the total mass of the rubber composition in terms of reliably obtaining an intended effect caused by the multi-component copolymer.

Types of rubber components other than the multi-component copolymer of the present disclosure are not particularly restricted and can be appropriately selected according to the purpose. Examples of other rubber components include polyisoprene, butadiene rubber (BR), acrylonitrile-butadiene rubber (NBR), chloroprene rubber, ethylene-propylene rubber (EPM), ethylene-propylene-nonconjugated diene rubber (EPDM), polysulfide rubber, silicone rubber, flurorubber, and urethane rubber. Either a single type or combination of two or more types of these examples may be used as the other rubber components.

The aforementioned rubber composition may optionally contain filler, e.g. for the purpose of improving the reinforcing property of the composition. A content of the filler, although it is not particularly restricted and appropriately selected according to the purpose, is preferably 10 to 100 parts by mass, more preferably 20 to 80 parts by mass, and most preferably 30 to 60 parts by mass, with respect to 100 parts by mass of the rubber component. The content of filler, of ≥ 10 parts by mass with respect to 100 parts by mass of the rubber component, ensures an effect of improving the reinforcing property of the rubber composition caused by the filler. The content of filler, of ≤ 100 parts by mass with respect to 100 parts by mass of the rubber component, ensures good workability of the rubber composition, while avoiding significant deterioration of the low-heat generation property thereof.

Type of the filler is not particularly restricted and examples thereof include carbon black, silica, aluminum hydroxide, clay, alumina, talc, mica, kaolin, glass balloons, glass beads, calcium carbonate, magnesium carbonate, magnesium hydroxide, magnesium oxide, titanium oxide, potassium titanate, and barium sulfate. Carbon black is preferably used among these examples. Either a single type or combination of two or more types of these examples may be used as the filler.

Type of the carbon black is not particularly restricted and can be appropriately selected according to the purpose. Examples of the carbon black include FEF, GPF, SRF, HAF, N339, IISAF, ISAF, and SAF. Either a single type or combination of two or more types of these examples may be used as the carbon black. The nitrogen adsorption specific surface area (N₂SA, measured according to JIS K 6217-2: 2001) of the carbon black is not particularly restricted and can be appropriately selected according to the purpose but is preferably in the range of 20 to 100 m²/g and more preferably in the range of 35 to 80 m²/g. The nitrogen adsorption specific surface area (N₂SA) of the carbon black, of ≥ 20 m²/g, ensures improvement of durability and thus attaining satisfactorily high crack growth resistance. The N₂SA of the carbon black, of ≤ 100 m²/g, ensures good workability of the rubber composition, while avoiding significant deterioration of the low-heat generation property thereof.

The aforementioned rubber composition may optionally contain a crosslinking agent. Type of the crosslinking agent is not particularly restricted and can be appropriately selected according to the purpose. Examples of the crosslinking agent include sulfur-based crosslinking agent, organic peroxide-based crosslinking agent, inorganic crosslinking agent, polyamine crosslinking agent, resin crosslinking agent, sulfur compound-based crosslinking agent, and oxime-nitrosamine-based crosslinking agent. Sulfur-based crosslinking agent is preferably applied to a rubber composition for a tire among these examples.

The content of the crosslinking agent is not particularly restricted and can be appropriately selected according to the purpose but is preferably in the range of 0.1 to 20 parts by mass with respect to 100 parts by mass of the rubber component.
The content of the crosslinking agent described above less than 0.1 parts by mass may result in a situation where crosslinking hardly proceeds. The content of the crosslinking agent described above exceeding 20 parts by mass may cause a portion of the crosslinking agent to prematurely start crosslinking during mixing and kneading and/or adversely affect the physical properties of a resulting vulcanized product.

Further, a vulcanization-accelerator may also be added as another component to the rubber composition of the present disclosure. Examples of the vulcanization-accelerator include a guanidine compound, an aldehyde-amine compound, an aldehyde-ammonium compound, a thiazole compound, a sulfenamide compound, a thiourea compound, a thiuram compound, a dithiocarbamate compound, and a xanthate compound.
Yet further, other known additives such as a softener, a vulcanization accelerator aid, a coloring agent, a fire retardant, a lubricant, a foaming agent, a plasticizer, a processing aid, an antioxidant, an antiaging agent, a scorch protection agent, a UV protection agent, an antistatic agent, and an anticoloring agent may optionally be used in the rubber composition of the present disclosure according to the purpose.

The rubber composition of the present disclosure may be subjected to crosslinking, so that a resulting crosslinked rubber composition can be used.
Type of the crosslinked rubber composition is not particularly restricted and can be appropriately selected according to the purpose as long as the crosslinked rubber composition is obtained by crosslinking the rubber composition of the present disclosure. The crosslinking condition is not particularly restricted and can be appropriately selected according to the purpose. The crosslinking temperature is preferably in the range of 120 °C to 200 °C and the heating time is preferably in the range of 1 minute to 900 minutes.

### < Rubber article >

A rubber article of the present disclosure is characterized in that it uses the rubber composition of the present disclosure.

The rubber article of the present disclosure is excellent in low-heat generation property and wear resistance because the rubber article uses the rubber composition containing the multi-component copolymer of the present disclosure. Types of the rubber article of the present disclosure and a manufacturing method thereof are not particularly restricted and can be appropriately selected according to the purpose. Examples of the rubber article include a tire, a rubber damper, quake-absorbing rubber, a belt such as a conveyor belt, a rubber crawler, and hoses of various types. In a case where the rubber composition of the present disclosure is applied to a tire, a portion to which the rubber composition is to be applied, of the tire, is not particularly limited and the tire portion can be appropriately selected according to the purpose. Examples of the tire portion include a tread rubber portion, a base tread rubber portion, a sidewall rubber portion, a side reinforcing rubber portion, and a bead filler. Applying the rubber composition of the present disclosure to tread rubber among these examples is preferable in terms of effectively improving low-heat generation property and wear resistance of the tire.

### Examples

The present disclosure will be described further in detail by Examples below. The present disclosure, however, is not restricted by any means by these Examples.

### (Synthesis Example 1: Copolymer A)

0.7 g (6.7 mmol) of styrene and 300 g of cyclohexane were charged into a thoroughly dry 2L stainless reactor. On the other hand, 56 µmol of 1,3-bis(t-butyldimethylsilyl)indenyl gadolinium bis(bis(dimethylsilyl)amide) [1,3-(t-BuMe₂Si)₂C₉H₅Gd(N(SiHMe₂)₂)₂], 2.3 mmol of diisobutylaluminum hydride, and 62 µmol of N,N-dimethylanilinium tetrakis(pentafluorophenyl)borate [Me₂NHPhB(CeF₅)₄] were charged into a glass vessel in a glovebox under nitrogen atmosphere and these substances were dissolved in 35 mL of toluene, to obtain a catalyst solution. The catalyst solution was collected from the glovebox and the whole amount thereof was added to the reactor vessel. Thereafter, 561 g of a monomer solution containing 134 g of 1,3-butadiene (2.48 mol) was introduced into the reactor and polymerization was carried out at 70 °C for 120 minutes under pressurized ethylene atmosphere (1.0 MPa). The polymerization reaction was then stopped by adding 2-isopropanol solution (2 mL) of 5 mass % 2,2-methylene-bis(4-ethyl-6-t-butylphenol) (NS-5) after the polymerization. A large amount of 2-propanol was further added to isolate copolymer and the copolymer thus isolated was vacuum-dried at 60 °C, whereby copolymer A was obtained. The yield of copolymer A thus obtained was 155 g.

### (Synthesis Example 2: Copolymer B)

1.5 g (14.4 mmol) of styrene and 320 g of cyclohexane were charged into a thoroughly dry 2L stainless reactor. On the other hand, 62 µmol of 1,3-bis(t-butyldimethylsilyl)indenyl gadolinium bis(bis(dimethylsilyl)amide) [1,3-(t-BuMe₂Si)₂C₉H₅Gd(N(SiHMe₂)₂)₂], 2.3 mmol of diisobutylaluminum hydride, and 65 µmol of N,N-dimethylanilinium tetrakis(pentafluorophenyl)borate [Me₂NHPhB(CeF₅)₄] were charged into a glass vessel in a glovebox under nitrogen atmosphere and these substances were dissolved in 35 mL of toluene, to obtain a catalyst solution. The catalyst solution was collected from the glovebox and the whole amount thereof was added to the reactor vessel. Thereafter, 543 g of a monomer solution containing 134 g of 1,3-butadiene (2.48 mol) was introduced into the reactor and polymerization was carried out at 70 °C for 121 minutes under pressurized ethylene atmosphere (1.0 MPa). The polymerization reaction was then stopped by adding 2-isopropanol solution (2 mL) of 5 mass % 2,2-methylene-bis(4-ethyl-6-t-butylphenol) (NS-5) after the polymerization. A large amount of 2-propanol was further added to isolate copolymer and the copolymer thus isolated was vacuum-dried at 60 °C, whereby copolymer B was obtained. The yield of copolymer A thus obtained was 137 g.

### (Synthesis Example 3: Copolymer C)

3.0 g (0.03 mmol) of styrene and 300 g of cyclohexane were charged into a thoroughly dry 2L stainless reactor. On the other hand, 113 µmol of 1,3-bis(t-butyldimethylsilyl)indenyl gadolinium bis(bis(dimethylsilyl)amide) [1,3-(t-BuMe₂Si)₂C₉H₅Gd(N(SiHMe₂)₂)₂], 3.3 mmol of diisobutylaluminum hydride, and 124 µmol of N,N-dimethylanilinium tetrakis(pentafluorophenyl)borate [Me₂NHPhB(CeF₅)₄] were charged into a glass vessel in a glovebox under nitrogen atmosphere and these substances were dissolved in 50 mL of toluene, to obtain a catalyst solution. The catalyst solution was collected from the glovebox and the whole amount thereof was added to the reactor vessel. Thereafter, 558 g of a monomer solution containing 134 g of 1,3-butadiene (2.48 mol) was introduced into the reactor and polymerization was carried out at 70 °C for 120 minutes under pressurized ethylene atmosphere (1.0 MPa). The polymerization reaction was then stopped by adding 2-isopropanol solution (2 mL) of 5 mass % 2,2-methylene-bis(4-ethyl-6-t-butylphenol) (NS-5) after the polymerization. A large amount of 2-propanol was further added to isolate copolymer and the copolymer thus isolated was vacuum-dried at 60 °C, whereby copolymer C was obtained. The yield of copolymer C thus obtained was 108 g.

### (Synthesis Example 4: Copolymer a)

30 g (0.29 mmol) of styrene and 280 g of cyclohexane were charged into a thoroughly dry 2L stainless reactor. On the other hand, 113 µmol of 1,3-bis(t-butyldimethylsilyl)indenyl gadolinium bis(bis(dimethylsilyl)amide) [1,3-(t-BuMe₂Si)₂C₉H₅Gd(N(SiHMe₂)₂)₂], 3.3 mmol of diisobutylaluminum hydride, and 124 µmol of N,N-dimethylanilinium tetrakis(pentafluorophenyl)borate [Me₂NHPhB(CeF₅)₄] were charged into a glass vessel in a glovebox under nitrogen atmosphere and these substances were dissolved in 50 mL of toluene, to obtain a catalyst solution. The catalyst solution was collected from the glovebox and the whole amount thereof was added to the reactor vessel. Thereafter, 573 g of a monomer solution containing 134 g of 1,3-butadiene (2.48 mol) was introduced into the reactor and polymerization was carried out at 70 °C for 300 minutes under pressurized ethylene atmosphere (0.5 MPa). The polymerization reaction was then stopped by adding 2-isopropanol solution (2 mL) of 5 mass % 2,2-methylene-bis(4-ethyl-6-t-butylphenol) (NS-5) after the polymerization. A large amount of 2-propanol was further added to isolate copolymer and the copolymer thus isolated was vacuum-dried at 60 °C, whereby copolymer a was obtained. The yield of copolymer a thus obtained was 74 g.

### (Synthesis Example 5: Copolymer b)

1.5 g (14.4 mmol) of styrene and 320 g of cyclohexane were charged into a thoroughly dry 2L stainless reactor. On the other hand, 84 µmol of 1,3-bis(t-butyldimethylsilyl)indenyl gadolinium bis(bis(dimethylsilyl)amide) [1,3-(t-BuMe₂Si)₂C₉H₅Gd(N(SiHMe₂)₂)₂], 1.7 mmol of diisobutylaluminum hydride, and 92 µmol of N,N-dimethylanilinium tetrakis(pentafluorophenyl)borate [Me₂NHPhB(CeF₅)₄] were charged into a glass vessel in a glovebox under nitrogen atmosphere and these substances were dissolved in 60 mL of toluene, to obtain a catalyst solution. The catalyst solution was collected from the glovebox and the whole amount thereof was added to the reactor vessel. Thereafter, 554 g of a monomer solution containing 134 g of 1,3-butadiene (2.48 mol) was introduced into the reactor and polymerization was carried out at 70 °C for 30 minutes under pressurized ethylene atmosphere (1.5 MPa). The polymerization reaction was then stopped by adding 2-isopropanol solution (2 mL) of 5 mass % 2,2-methylene-bis(4-ethyl-6-t-butylphenol) (NS-5) after the polymerization. A large amount of 2-propanol was further added to isolate copolymer and the copolymer thus isolated was vacuum-dried at 60 °C, whereby copolymer b was obtained. The yield of copolymer b thus obtained was 46 g.

### (Synthesis Example 6: Copolymer c)

260 g of toluene solution containing 9.14 g (0.17 mol) of 1,3-butadiene was charged into a thoroughly dry 400 mL pressure-resistant glass reactor and then ethylene was introduced thereto at 0.8 MPa, to obtain a monomer solution. On the other hand, 30.5 µmol of bis(2-phenylindenyl)gadolinium bis(dimethylsilyl)amide [(2-PhC₉H₆)₂GdN(SiHMe₂)₂], 35.8 µmol of N,N-dimethylanilinium tetrakis(pentafluorophenyl)borate [Me₂NHPhB(C₆F₅)₄], and 1.48 mmol of diisobutylaluminum hydride were charged into a glass vessel in a glovebox under nitrogen atmosphere and these substances were dissolved in 10 mL of toluene, to obtain a catalyst solution. The catalyst solution was collected from the glovebox and the whole amount thereof was added to the monomer solution, so that polymerization was carried out for 60 minutes at the room temperature. Thereafter, 60 ml of toluene solution containing 9.14 g (0.17 mol) of 1,3-butadiene was newly added to the mixture, to carry out polymerization for a further 60 minutes. The polymerization reaction was then stopped by adding 1 mL isopropanol solution of 5 mass % 2,2-methylene-bis(4-ethyl-6-t-butylphenol) (NS-5) after the polymerization. A large amount of methanol was added to isolate copolymer and the copolymer thus isolated was vacuum-dried at 60 °C, whereby copolymer c was obtained. The yield of copolymer c thus obtained was 17 g.

### (Synthesis Example 7: Copolymer d)

218 g (2.1 mol) of styrene and 560 g of toluene were charged into a thoroughly dry 2L stainless reactor. On the other hand, 270 µmol of 1,3-bis(t-butyldimethylsilyl)indenyl gadolinium bis(bis(dimethylsilyl)amide) [1,3-(t-BuMe₂Si)₂C₉H₅Gd(N(SifMe₂)₂)₂], 1.1 mmol of diisobutylaluminum hydride, and 297 µmol of N,N-dimethylanilinium tetrakis(pentafluorophenyl)borate [Me₂NHPhB(CeF₅)₄] were charged into a glass vessel in a glovebox under nitrogen atmosphere and these substances were dissolved in 39 mL of toluene, to obtain a catalyst solution. The catalyst solution was collected from the glovebox and the whole amount thereof was added to the reactor vessel. Thereafter, 86 g of a monomer solution containing 21 g of 1,3-butadiene (0.38 mol) was introduced into the reactor and polymerization was carried out at 65 °C for 480 minutes under pressurized ethylene atmosphere (1.4 MPa). The polymerization reaction was then stopped by adding 2-isopropanol solution (2 mL) of 5 mass % 2,2-methylene-bis(4-ethyl-6-t-butylphenol) (NS-5) after the polymerization. A large amount of 2-propanol was further added to isolate copolymer and the copolymer thus isolated was vacuum-dried at 60 °C, whereby copolymer d was obtained. The yield of copolymer d thus obtained was 25 g.

### The characteristics of each of the copolymers obtained by Synthesis

Examples 1-7 (content of aromatic vinyl unit, content of non-conjugated olefin unit, content of conjugated diene unit, weight average molecular weight, molecular weight distribution, melting point, melting enthalpy of the non-conjugated olefin portion) were measured respectively, as described below. The measurement results are shown in Table 1.
Main chains of the copolymers obtained by Synthesis Examples 1-7 were unanimously non-cyclic.

### • Identification of respective copolymers

Each of the copolymers obtained as described above was subjected to: measurement of gel permeation chromatography-refraction index curve (GPC-RI curve) to confirm monodispersion thereof; and measurement of ¹H-NMR spectrum and ¹³C-NMR spectrum to confirm presence of an aromatic ring skeleton derived from the aromatic vinyl compound thereof, i.e. to confirm that the copolymer was terpolymer.

As a result of the identification, it was confirmed that the respective copolymers A-C and a-d were terpolymers.

• Weight average molecular weight (Mw) and molecular weight distribution (Mw/Mn) relative to polystyrene standard reference
The weight average molecular weight (Mw) relative to polystyrene standard reference and the molecular weight distribution (Mw/Mn) based thereon were determined for each of the copolymers by using gel permeation chromatography [GPC: HLC-8321GPC/HT manufactured by Tosoh Corporation, column: GMH_{HR}-H(S)HT × 2 manufactured by Tosoh Corporation, detector: a differential refractive index detector (RI)] relative to monodisperse polystyrene as a standard reference material, and trichlorobenzene as a solvent. The measurement temperature was 140 °C.

### • Melting point (Tm)

Melting point of each of the respective copolymers was measured according to JIS K 7121-1987 by using a differential scanning calorimeter (DSC) ("DSCQ2000" manufactured by TA Instruments Japan). When the copolymer had a plurality of melting points, the highest melting point of them was selected for evaluation and the value thereof was shown in Table 1.

### • Melting enthalpy of non-conjugated olefin portion

Crystal melting enthalpy of a non-conjugated olefin portion of a multi-component copolymer was determined as enthalpy (J/g) when the crystal melts at a temperature increasing rate of 10 °C/min in a temperature range of 0 °C to 140 °C according to JIS K 7121-1987 by using a differential scanning calorimeter (DSC) ("DSCQ2000" manufactured by TA Instruments Japan).

**[Table 1]**

| | | Copolymer A | Copolymer B | Copolymer C | Copolymer a | Copolymer b | Copolymer c | Copolymer d |
|---|---|---|---|---|---|---|---|---|
| Content of aromatic vinyl unit | [mol%] | 0.3 | 0.5 | 1.2 | 12 | 2.2 | 0 | 9 |
| Content of non-conjugated olefin unit | [mol%] | 37 | 28 | 34 | 9 | 42 | 16 | 70 |
| Content of conjugated diene unit | [mol%] | 63 | 72 | 65 | 79 | 56 | 84 | 21 |
| Weight average molecular weight (Mw) | | 177 | 203 | 225 | 242 | 183 | 242 | 361 |
| Molecular weight distribution (Mw/Mn) | | 3.7 | 3.1 | 3.6 | 2.1 | 4.1 | 5.2 | 2.6 |
| Melting point | [°C] | 77 | 85 | 75 | 126 | 116 | 101 | 75 |
| Melting enthalpy of the non-conjugated olefin portion | [J/g] | 24 | 20 | 19 | 3 | 21 | 11 | 33 |

### (Preparation and evaluation of rubber composition)

Rubber compositions were prepared as samples of Examples and Comparative Examples by the conventional method by using the respective copolymers according to the blending prescriptions shown in Table 2.

Next, each of the rubber composition samples was subjected to crosslinking (vulcanization) at 160 °C for 30 minutes, whereby vulcanized rubber composition samples were obtained. Low-heat generation property and wear resistance were evaluated for each of the vulcanized rubber composition samples, as described below. The evaluation results are shown in Table 2.

### • Low-heat generation property

A tanδ value was measured for each of the vulcanized rubber composition samples by using a dynamic spectrum analyzer under the conditions of tensile dynamic strain: 3%, frequency: 15 Hz, and temperature: 50 °C. The tanδ value was expressed by an index value calculated as (the measured value of Comp. Example 1)/(the measured value of Example/Comp. Example) × 100. The index value of Comp. Example 1 is 100 accordingly. The larger index value represents the better low-heat generation property.

### • Wear resistance

Wear resistance was determined for each of the vulcanized rubber composition samples by: measuring an amount of wear at slip rate of 60 % at 40 °C according to JIS K6264-2: 2005 by using a Lambourn abrasion tester; calculating the inverse number of the amount of wear; converting the inverse number to an index value relative to the inverse number of Comp. Example 1 being "100"; and expressing the index value thus calculated as wear resistance of the sample.

The larger index value represents the less amount of wear and thus the higher wear resistance.

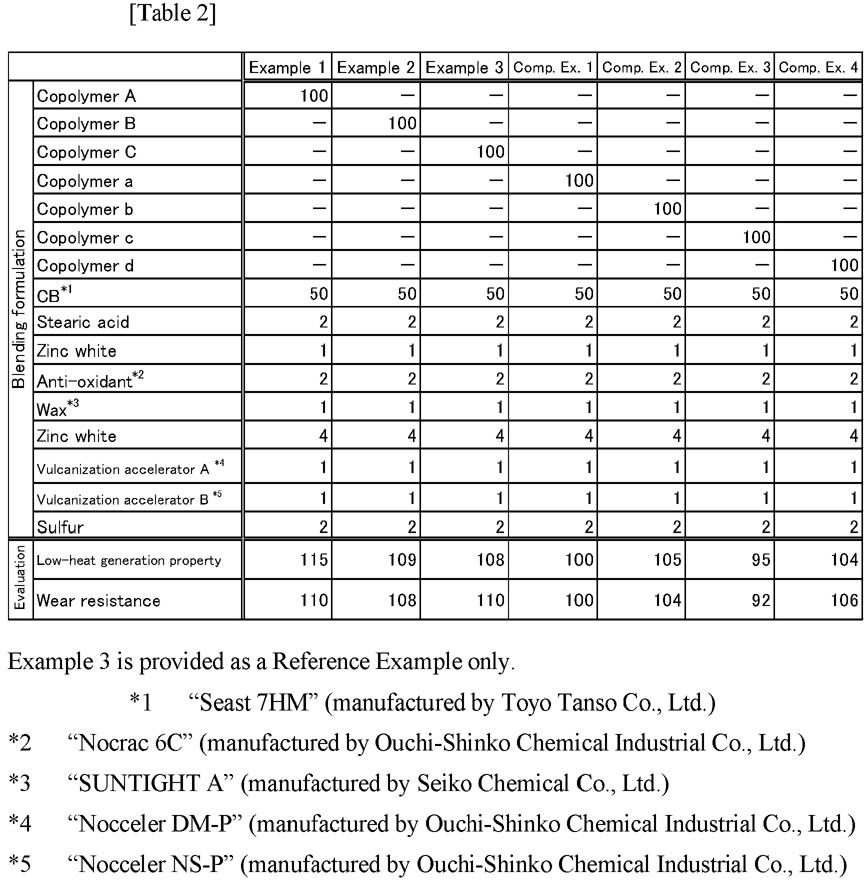

It is understood from the results shown in Table 2 that the samples of Examples 1-3 unanimously exhibited better results in both low-heat generation property and wear resistance than the samples of Comparative Examples 1-4.

### INDUSTRIAL APPLICABILITY

According to the present disclosure, it is possible to provide a multi-component copolymer being excellent in low-heat generation property and wear resistance. Further, it is possible to provide a rubber composition and a rubber article being excellent in low-heat generation property and wear resistance by using the multi-component copolymer.

## Claims

1. A multi-component copolymer, containing a conjugated diene unit, a non-conjugated olefin unit and an aromatic vinyl unit, wherein:
a main chain thereof consists of noncyclic structures, a content of the aromatic vinyl unit is 1 mol % or less, and melting enthalpy of a non-conjugated olefin portion as a chain unit constituted exclusively of the non-conjugated olefin unit is 25 J/g or less, and
wherein the melting enthalpy of the non-conjugated olefin portion is determined as enthalpy (J/g) when the crystal melts at a temperature increasing rate of 10 °C/min in a temperature range of 0 °C to 140 °C according to JIS K 7121-1987 by using a differential scanning calorimeter.

2. The multi-component copolymer of claim 1, wherein the multi-component copolymer has melting point of 80 °C or lower.

3. The multi-component copolymer of claim 1 or 2, wherein a content of the non-conjugated olefin unit is less than 40 mol %.

4. The multi-component copolymer of any of claims 1 to 3, wherein a content of the non-conjugated olefin unit is 20 mol % or more.

5. The multi-component copolymer of any of claims 1 to 4, wherein a content of the conjugated diene unit is less than 80 mol %.

6. The multi-component copolymer of any of claims 1 to 5, wherein a content of the conjugated diene unit is 60 mol % or more.

7. The multi-component copolymer of any of claims 1 to 6, wherein the non-conjugated olefin unit is constituted exclusively of ethylene units.

8. The multi-component copolymer of any of claims 1 to 7, wherein the aromatic vinyl unit includes styrene unit.

9. The multi-component copolymer of any of claims 1 to 8, wherein the conjugated diene unit includes 1,3-butadiene unit and/or isoprene unit.

10. The multi-component copolymer of any of claims 1 to 9, wherein the multi-component copolymer consists of 1,3-butadiene unit, ethylene unit and styrene unit.

11. A rubber composition, including the multi-component copolymer of any of claims 1 to 10.

12. A rubber article, using the rubber composition of claim 11.

## Patentansprüche

1. Mehrkomponentencopolymer, das eine konjugierte Dieneinheit, eine nichtkonjugierte Olefineinheit und eine aromatische Vinyleinheit enthält, wobei:
eine Hauptkette davon aus nichtcyclischen Strukturen besteht, ein Gehalt der aromatischen Vinyleinheit 1 Mol-% oder weniger beträgt und die Schmelzenthalpie eines nichtkonjugierten Olefinteils als Ketteneinheit, die ausschließlich aus der nichtkonjugierten Olefineinheit besteht, 25 J/g oder weniger beträgt und
wobei die Schmelzenthalpie des nichtkonjugierten Olefinteils als Enthalpie (J/g), wenn das Kristall bei einer Temperaturerhöhungsrate von 10 °C/min in einem Temperaturbereich von 0 °C bis 140 °C JIS K7121-1987 entsprechend schmilzt, durch Verwenden eines Differential-Scanning-Kalorimeters bestimmt wird

2. Mehrkomponentencopolymer nach Anspruch 1, wobei das Mehrkomponentencopolymer einen Schmelzpunkt von 80 °C oder weniger aufweist.

3. Mehrkomponentencopolymer nach Anspruch 1 oder 2, wobei ein Gehalt der nichtkonjugierten Olefineinheit weniger als 40 Mol-% beträgt.

4. Mehrkomponentencopolymer nach einem der Ansprüche 1 bis 3, wobei ein Gehalt der nichtkonjugierten Olefineinheit 20 Mol-% oder mehr beträgt.

5. Mehrkomponentencopolymer nach einem der Ansprüche 1 bis 4, wobei ein Gehalt der konjugierten Dieneinheit weniger als 80 Mol-% beträgt.

6. Mehrkomponentencopolymer nach einem der Ansprüche 1 bis 5, wobei ein Gehalt der konjugierten Dieneinheit 60 Mol-% oder mehr beträgt.

7. Mehrkomponentencopolymer nach einem der Ansprüche 1 bis 6, wobei die nichtkonjugierte Olefineinheit ausschließlich aus Ethyleneinheiten besteht

8. Mehrkomponentencopolymer nach einem der Ansprüche 1 bis 7, wobei die aromatische Vinyleinheit eine Styroleinheit umfasst.

9. Mehrkomponentencopolymer nach einem der Ansprüche 1 bis 8, wobei die konjugierte Dieneinheit eine 1,3-Butadieneinheit und/oder Isopreneinheit umfasst.

10. Mehrkomponentencopolymer nach einem der Ansprüche 1 bis 9, wobei das Mehrkomponentencopolymer aus einer 1,3-Butadieneinheit, Ethyleneinheit und Styroleinheit besteht.

11. Kautschukzusammensetzung, die das Mehrkomponentencopolymer nach einem der Ansprüche 1 bis 10 umfasst.

12. Kautschukartikel, der die Kautschukzusammensetzung nach Anspruch 11 verwendet.

## Revendications

1. Copolymère à composants multiples, contenant un motif diène conjugué, un motif d'oléfine non conjuguée et un motif de vinyle aromatique :
une chaîne principale de celui-ci étant constituée de structures non cycliques, une teneur du motif de vinyle aromatique étant de 1 % en mole ou moins, et l'enthalpie de fusion d'une portion d'oléfine non conjuguée comme motif de chaîne constituée exclusivement du motif d'oléfine non conjuguée étant de 25 J/g ou moins, et
l'enthalpie de fusion de la portion d'oléfine non conjuguée étant déterminée comme enthalpie (J/g) lorsque le cristal fond à une vitesse d'accroissement de température de 10°C/min dans une plage de températures de 0°C à 140°C selon la norme JIS K 7121-1987 en utilisant un calorimètre différentiel à compensation de puissance.

2. Copolymère à composants multiples selon la revendication 1, le copolymère à composants multiples ayant un point de fusion de 80°C ou moins.

3. Copolymère à composants multiples selon la revendication 1 ou 2, une teneur du motif d'oléfine non conjuguée étant inférieure à 40 % en mole.

4. Copolymère à composants multiples selon l'une quelconque des revendications 1 à 3, une teneur du motif d'oléfine non conjuguée étant de 20 % en mole ou plus.

5. Copolymère à composants multiples selon l'une quelconque des revendications 1 à 4, une teneur du motif diène conjugué étant inférieure à 80 % en mole.

6. Copolymère à composants multiples selon l'une quelconque des revendications 1 à 5, une teneur du motif diène conjugué étant de 60 % en mole ou plus.

7. Copolymère à composants multiples selon l'une quelconque des revendications 1 à 6, le motif d'oléfine non conjuguée étant exclusivement constitué de motifs éthylène.

8. Copolymère à composants multiples selon l'une quelconque des revendications 1 à 7, le motif de vinyle aromatique comprenant le motif styrène.

9. Copolymère à composants multiples selon l'une quelconque des revendications 1 à 8, le motif diène conjugué comprenant un motif 1,3-butadiène et/ou le motif isoprène.

10. Copolymère à composants multiples selon l'une quelconque des revendications 1 à 9, le copolymère à composants multiples étant constitué d'un motif 1,3-butadiène, d'un motif éthylène et d'un motif styrène.

11. Composition de caoutchouc, comprenant le copolymère à composants multiples selon l'une quelconque des revendications 1 à 10.

12. Article de caoutchouc, utilisant la composition de caoutchouc selon la revendication 11.
